# EUROPEAN PATENT SPECIFICATION

(11) **EP 2 447 568 B1**
(45) Date of publication and mention of the grant of the patent: **28.08.2019**
(21) Application number: 10792117.3
(22) Date of filing: 23.06.2010
(51) Int. Cl.: F16G 11/00, E06B 9/326, F16B 21/04, F16G 13/12

(54) **OPERATION CORD AND METHOD OF MANUFACTURING OPERATION CORD**
BETRIEBSSTRANG UND HERSTELLUNGSVERFAHREN FÜR BETRIEBSSTRANG
CORDE D'OPÉRATION ET PROCÉDÉ DE FABRICATION DE CORDE D'OPÉRATION

(30) Priority: 25.06.2009 JP 2009151568; 25.06.2009 JP 2009151567; 25.06.2009 JP 2009151569; 24.07.2009 JP 2009173385
(43) Date of publication of application: 02.05.2012
(73) Proprietor: Tachikawa Corporation, Tokyo 108-8334 (JP)
(72) Inventor: NAKAMURA, Hajime, Tokyo 108-8334 (JP); KAWAI, Eiji, Tokyo 108-8334 (JP); YAMAGUCHI, Masaya, Tokyo 108-8334 (JP)
(74) Representative: Gulde & Partner
(86) International application number: PCT/JP2010/060611
(87) International publication number: WO 2010/150799

(56) References cited:
- EP-A1- 0 565 379
- EP-A1- 1 026 422
- JP-A- 7 004 155
- JP-A- 2003 184 456
- JP-A- 2007 177 440
- US-B1- 6 250 359

## Description

### TECHNICAL FIELD

This invention is related to an operation cord of an elevation apparatus of such as a horizontal blind, a vertical blind, a shade, a screen window, an up-down sliding window, an awning, a skylight window, and a laundry pole, and other apparatuses.

### BACKGROUND ART

An elevation apparatus has been known where an endless-type operation cord is engaged with a pulley that is supported at an end of a support frame so as to be rotatable, and the operation cord is operated to rotate the pulley so that a light shielding member which is hanging from the support frame moves up and down.

Some of such operation cords have a portion (coupling portion) at which coupling and uncoupling can be performed. The functions of the coupling portion are, for example, to be uncoupled, when a dweller catches the operation cord with his/her foot, in order to prevent an accident, and to be converted easily to a non-loop form, when the operation cord is to be replaced, so as to facilitate replacement.

In JP 2003-184456 A an operation cord is proposed that is equipped with a coupling portion which is uncoupled when a fast and furious force is applied in an extending direction of the operation cord.

EP 0 565 379 A1 describes ball chains for ornamental parts and accessories associated with building interiors. The ball chains comprise a cord whose both ends are coupled by a splicing means having a clamp structure adapted to fit with and connect half-balls provided at both ends of the cord.

### SUMMARY OF THE INVENTION

### PROBLEMS TO BE RESOLVED BY THE INVENTIONS

With the operation cord equipped with the safety tool disclosed in JP 2003-184456 A, only a limited number of troubles occur when the force applied to the operation cord is weak or when durability is not needed, however, under the condition where a certain degree of durability is required, the operation cord sometimes gets broken before a predetermined number of usage count is reached, because of insufficient durability.

The present invention is made in view of the above situations, and aims to provide an operation cord that is excellent in durability.

### MEANS FOR SOLVING THE PROBLEMS

According to an aspect of the invention, an operation cord comprising a cord whose both ends are coupled by means of a coupling portion is provided, the operation cord being characterized in that the coupling portion has a first coupling part and a second coupling part which are coupled with each other directly or via a coupling member, one of the coupling parts or the coupling member adjacent to each other has a fitting protrusion, and the other of the coupling parts or the coupling member adjacent to each other has a fitting hole capable of fitting with the fitting protrusion, and the fitting protrusion is a solid body.

The inventors of the present invention have found that the operation cord equipped with the coupling portion described in JP 2003-184456 A is not suitable for applications where durability is required, so that an operation cord of another configuration is required. Further, the inventors have found that the fact that the coupling portion described in JP 2003-184456 A does not have durability is caused from a fitting mechanism that is composed of a fitting protrusion of a hollow structure and a fitting hole.

Based on this knowledge, the inventors have found that an operation cord of a configuration in which a fitting protrusion formed of a solid body is fitted in a fitting hole possesses excellent durability, and have arrived at the completion of the present invention.

Hereinafter various embodiments of the present invention will be described. The embodiments set force below can be combined with one another.

In an example, an operation cord may be a ball chain where balls of a synthetic resin are molded and firmly fixed to the cord at regular intervals so as to form a ball chain, and both ends of the ball chain are coupled by means of a coupling portion so that the ball chain is of endless-type, wherein the coupling portion is provided with a fitting portion which turns into a same shape as that of the ball, the fitting portion comprises a first fitting part provided with a fitting protrusion of a solid body and a second fitting part provided with a fitting hole capable of fitting with the fitting protrusion, and the fitting protrusion is capable of resiliently fitting with and being removed from the fitting hole.

In an example, an operation cord may have a cord whose both ends are coupled by means of a coupling portion, wherein the coupling portion comprises a first fitting part provided with an axial fitting protrusion and a second fitting part provided with a fitting hole capable of fitting with the fitting protrusion, and the fitting protrusion is capable of fitting with the fitting hole through being inserted into the fitting hole and subsequently rotated.

In an example, the operation cord may have a cord whose both ends are coupled by means of a coupling portion so that the cord is endless, wherein the coupling portion is provided with fitting protrusions provided at the both ends of the cord, and a tubular coupling member capable of fitting with the fitting protrusions such that the fitting protrusions face each other.

In an example, an operation cord may have a cord whose both ends are coupled by means of a connector so that the cord is endless, wherein the connector is provided with a pair of connector pieces with which balls attached to the ends of the cord are capable of engaging, and a coupling member which couples the connector pieces. The connector of this cord may also be an example.

In an example, balls of a synthetic resin may be molded and firmly fixed to the cord at regular intervals.

In an example, the coupling portion may be provided with a fitting portion which turns into a same shape as the ball, wherein the fitting portion comprises a first fitting part provided with a fitting protrusion of a solid body and a second fitting part provided with a fitting hole capable of fitting with the fitting protrusion, and the fitting protrusion is capable of resiliently fitting with and being removed from the fitting hole.

In an example, a front end of the fitting protrusion may be provided with a swelled portion which has a diameter greater than that of a base end of the fitting protrusion, and a deep section of the fitting hole may be provided with a locking portion configured to hold the swelled portion resiliently.

In an example, the coupling portion may be provided with a coupling member which is provided with the fitting protrusion at an end of a first coupling cord, and another coupling member which is provided with the fitting hole at an end of a second coupling cord, wherein a hemispheroid provided at the other end of each coupling cord and a hemispheroid provided at each end of the cord are fused to each other so as to form the ball.

In an example, the fitting protrusion may be formed at the end of the first coupling cord by means of outsert molding.

In an example, an end of the fitting protrusion may be provided with a chamfered edge.

In an example, the fitting protrusion may be provided with a swelled portion, the fitting hole may be provided therein with a locking portion configured to engage with the swelled portion, and the locking portion may be provided with a chamfered edge.

In an example, the second fitting part may be formed at an end of the second coupling cord by means of outsert molding, a front end of the second fitting part may be provided with the fitting hole, and a depth of the fitting hole may be equal to or smaller than a half of a length of the second fitting part.

In an example, the coupling portion may comprise a first fitting part provided with an axial fitting protrusion and a second fitting part provided with a fitting hole capable of fitting with the fitting protrusion, and the fitting protrusion is capable of fitting with the fitting hole through being inserted into the fitting hole and subsequently rotated.

In an example, the fitting protrusion may be provided with a swelled portion which has a diameter greater than that of a base end of the fitting protrusion, and the fitting hole may be provided with a locking portion configured to engage with the swelled portion.

In an example, the first fitting part and the second fitting part mat be molded from a synthetic resin.

In an example, the swelled portion and an inner peripheral surface of the fitting hole may be provided with positioning means configured to position the fitting protrusion rotationally.

In an example, the coupling portion may be provided with a first fitting part provided at an end of the cord, and a second fitting part provided at the other end of the cord.

In an example, a fitting position of the fitting protrusion and the fitting hole may be set at a position to which the fitting protrusion is brought through a rotation of 90 degrees after inserted in the fitting hole.

In an example, the coupling portion may be provided with axial fitting protrusions provided at both ends of the cord, and a tubular coupling member capable of fitting with the fitting protrusions such that the fitting protrusions face each other.

In an example, a front end of each of the fitting protrusions may be provided with a swelled portion which has a diameter greater than that of a base end of the fitting protrusion, and the coupling member may be provided with locking portions each configured to engage with the swelled portion when the swelled portion is inserted and rotated.

In an example, the fitting protrusions and the coupling member may be molded from a synthetic resin.

In an example, the swelled portion and an inner peripheral surface of the coupling member may be provided with positioning means configured to position the fitting protrusion rotationally.

In an example, fitting angles at which a pair of the fitting protrusions fit with the coupling member may be relatively shifted from each other.

In an example, fitting angles at which a pair of the fitting protrusions fit with the coupling member may be set such that central lines of the fitting protrusions intersect with each other at a right angle.

In an example, the fitting protrusions may be formed on the cord by means of outsert molding.

In an example, the coupling portion may comprise a pair of connector pieces capable of engaging with balls attached to the ends of the cord, and a coupling member configured to couple the connector pieces.

In an example, the connector piece and the coupling member may be provided with holding means configured to cause the connector pieces to engage resiliently with the coupling member when the connector pieces are inserted into the coupling member so as to face each other and subsequently rotated.

In an example, the holding means may comprise axial fitting protrusions provided to the connector pieces, a swelled portion provided at a front end of each of the fitting protrusions, which has a diameter greater than that of a base end of the fitting protrusion, the coupling member of a tubular shape capable of having the fitting protrusions inserted therein, and a locking portion provided to the coupling member and configured to engage with the swelled portion when the swelled portion is inserted in the coupling member and subsequently rotated.

In an example, the connector pieces and the coupling member may be molded from a synthetic resin.

In an example, the swelled portion and an inner peripheral surface of the coupling member may be provided with positioning means configured to position the fitting protrusion rotationally.

In an example, fitting angles at which a pair of the fitting protrusions fit with the coupling member may be relatively shifted from each other.

In an example, fitting angles at which a pair of the fitting protrusions fit with the coupling member may be set such that central lines of the fitting protrusions intersect with each other at a right angle.

In an example, the pair of the fitting protrusions may have a same shape.

In an example, the fitting protrusions may be solid bodies.

In an example, an external dimension of the connector piece may be set greater than a space between a pulley and a pulley case.

According to another aspect of the invention, a method of manufacturing an operation cord is provided, the method comprising the steps of: molding and firmly fixing balls of a synthetic resin onto a cord at regular intervals; forming a first fitting part provided with a fitting protrusion, at an end of a first coupling cord; forming a hemispheroid corresponding to a half of the ball, at the other end of the first coupling cord; forming a second fitting part provided with a fitting hole capable of resiliently fitting with and being removed from the fitting protrusion, at an end of a second coupling cord; forming a hemispheroid corresponding to a half of the ball, at the other end of the second coupling cord, a shape of the first and second fitting parts when the fitting protrusion is fitted with the fitting hole being the same as a shape of the ball; and fusing the hemispheroids of the first and second coupling cords to hemispheroids formed at both ends of the cord, so as to form the balls.

In an example, molding a synthetic resin into the first fitting part, and forming a hemispheroid at the end of the second coupling cord followed by cutting a central part of the hemispheroid to form the fitting hole of the second coupling part, may be performed.

In an example, outsert molding on the first coupling code with a solid body may be performed in forming the first fitting part, such that the first coupling code is embedded in a region of the first fitting part spanning from a base end through a front end.

### EFFECT OF THE INVENTION

According to the present invention, an operation cord that is excellent in durability is provided.

### BRIEF DESCRIPTION OF THE DRAWINGS

Fig. 1 is a front view illustrating a horizontal blind of a first embodiment;
Fig. 2 is a front view illustrating a ball chain of the first embodiment not forming part of the present invention;
Fig. 3 is an exploded perspective view illustrating a coupling member of the first embodiment not forming part of the present invention;
Fig. 4 is a front view illustrating a first coupling member of the first embodiment not forming part of the present invention;
Fig. 5 is a sectional view illustrating a second coupling member of the first embodiment not forming part of the present invention;
Fig. 6 is a sectional view illustrating a fitting state of the coupling member of the first embodiment not forming part of the present invention;
Fig. 7 is a front view illustrating a ball chain of a second embodiment;
Fig. 8 is an exploded perspective view illustrating the second embodiment;
Fig. 9 is a front view illustrating a first coupling member of the second embodiment;
Fig. 10 is a bottom view illustrating the first coupling member of the second embodiment;
Fig. 11 is a sectional view taken along line A-A in Fig. 9;
Fig. 12 is a sectional view illustrating a second coupling member of the second embodiment;
Fig. 13 is a plan view illustrating the second coupling member of the second embodiment;
Fig. 14 is a sectional view taken along line B-B in Fig. 12;
Fig. 15 is a sectional view illustrating a fitting state of the coupling member of the second embodiment;
Fig. 16 is a front view illustrating a ball chain of a third embodiment;
Fig. 17 is a sectional view illustrating a coupling portion of the third embodiment;
Fig. 18 is an exploded perspective view illustrating the coupling portion of the third embodiment;
Fig. 19 is a front view illustrating a first coupling member of the third embodiment;
Fig. 20 is a plan view illustrating the first coupling member of the third embodiment;
Fig. 21 is a side view illustrating the first coupling member of the third embodiment;
Fig. 22 is a sectional view taken along line C-C in Fig. 19;
Fig. 23 is a front view illustrating a second coupling member of the third embodiment;
Fig. 24 is a rear view illustrating the second coupling member of the third embodiment;
Fig. 25 is a sectional view taken along line D-D in Fig. 23;
Fig. 26 is a sectional view taken along line E-E in Fig. 23;
Fig. 27 is a sectional view taken along line F-F in Fig. 25;
Fig. 28 is a sectional view illustrating a fitting state of the coupling member of the third embodiment;
Fig. 29 is an exploded perspective view illustrating another example of the third embodiment not forming part of the present invention;
Fig. 30 is a front view illustrating a ball chain of a fourth embodiment;
Fig. 31 is a perspective view illustrating a coupling portion of the fourth embodiment;
Fig. 32 is an exploded perspective view illustrating the coupling portion of the fourth embodiment;
Fig. 33 is a perspective view illustrating the coupling portion of the fourth embodiment;
Fig. 34 is a side view illustrating the coupling portion of the fourth embodiment;
Fig. 35 is a side view illustrating a connector piece of the fourth embodiment;
Fig. 36 is a sectional view illustrating a rotation restriction portion of the connector piece of the fourth embodiment;
Fig. 37 is a side view illustrating a coupling member of the fourth embodiment;
Fig. 38 is a side view illustrating the coupling member of the fourth embodiment;
Fig. 39 is a sectional view taken along line A-A in Fig. 37;
Fig. 40 is a sectional view taken along line B-B in Fig. 37;
Fig. 41 is a sectional view taken along line C-C in Fig. 39; and
Fig. 42 is a sectional view illustrating a fitting state of a fitting protrusion and the coupling member of the fourth embodiment;

### EMBODIMENTS FOR CARRYING OUT THE INVENTION

### (First Embodiment)

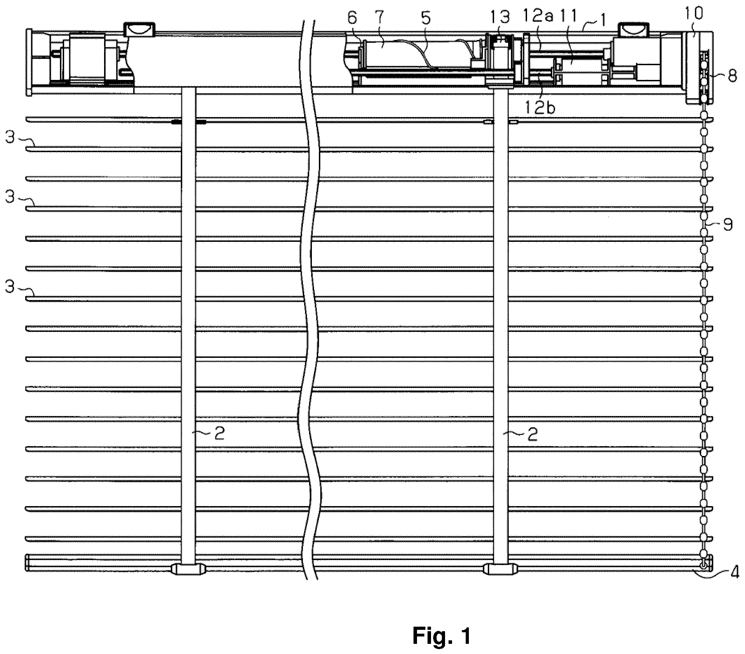

A first embodiment of the present invention will be described with reference to Figs. 1 to 6. In this embodiment, the "operation cord" of the claims is a ball chain 9, and the "coupling portion" is composed of a first coupling member 17 and a second coupling member 18. The first coupling member 17 has a fitting protrusion 22 of a solid body.

Hereafter the embodiment will be described in further detail.

In a horizontal blind shown in Fig. 1, multiple slats 3 are supported by ladder tapes 2 which are supported by a head box 1 so as to suspend therefrom, and a bottom rail 4 is attached to bottom ends of the ladder tapes 2.

Hoisting cords 5 are inserted in the slats 3 at positions near the supporting positions of the ladder tapes 2, and the bottom rail 4 is supported by bottom ends of the hoisting cords 5 so as to suspend therefrom. Top ends of the hoisting cords 5 are wound around a winding shaft 7 which is supported so as to be rotatable by a supporting member 6 disposed in the head box 1.

A pulley 8 is supported so as to be rotatable by an end of the head box 1, and a ball chain 9 of an endless type is engaged with the pulley 8. When the ball chain 9 is operated to rotate the pulley 8 in a forward or reverse direction, the winding shaft 7 is rotated via a gear box 10, a hoisting shaft 12a and the like, so that the hoisting cord 5 is wound by the winding shaft 7 or unwound, causing the slats 3 and the bottom rail 4 to move up or down.

When the pulley 8 is rotated, a tilt drum 13 is rotated via the gear box 10, a tilt unit 11, a tilt shaft 12b and the like, and the respective slats 3 are turned via the ladder tapes 2.

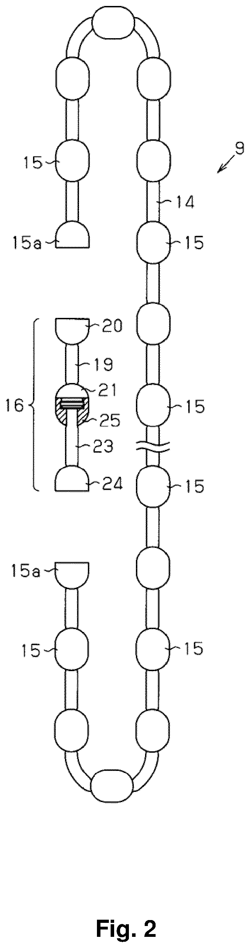

Now referring to Figs. 2 to 6, the specific configuration of the ball chain 9 is described. As shown in Fig. 2, balls 15 of a synthetic resin are molded at regular intervals on a cord 14 of polyester to form the ball chain 9. Each ball 15 is a solid body molded on a surface of the cord 14 to have a prolate spheroid shape by a molding machine, and each ball 15 is firmly fixed to the cord 14 so as to be immovable.

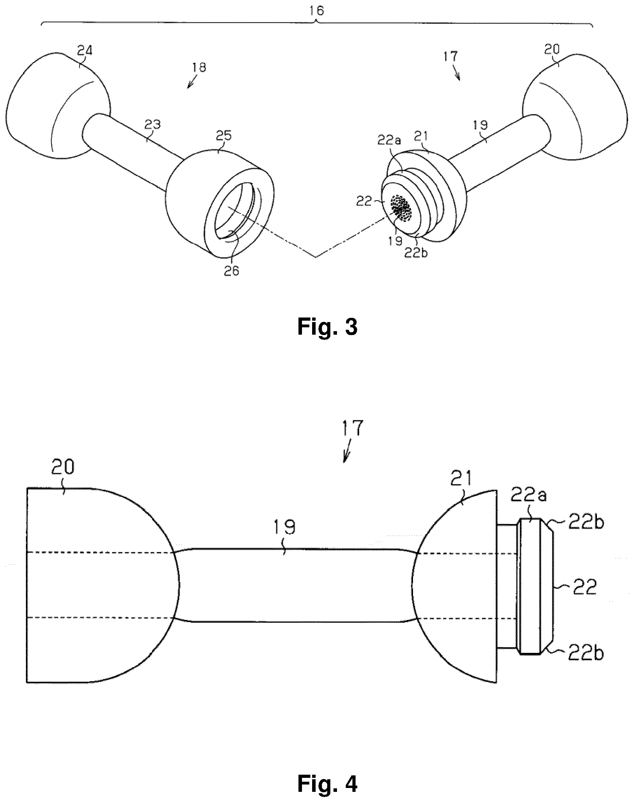

Both ends of the cord 14 are coupled to each other by means of the coupling portion 16 to form the endless-type ball chain 9. As shown in Fig. 3, the coupling portion 16 is composed of a first coupling member 17 and a second coupling member 18.

In the first coupling member 17, as shown in Fig. 4, a hemispheroid (half ball) 20 which is a little larger than a half of the ball 15 is formed by outsert molding onto an end of a coupling cord 19 made of a same material as that of the cord 14, and a first fitting part 21 is formed by outsert molding onto the other end such that the first fitting part 21 is solid as far as its front end. A space between the hemispheroid 20 and the first fitting part 21 is the same as the space between the balls 15.

Further, as shown in Fig. 3, since the first fitting part 21 is formed by outsert molding with a solid body such that the coupling cord 19 is embedded from a front end through a base end of the first fitting part 21, a sufficient joint strength is ensured between the first fitting part 21 and the coupling cord 19. Fig. 4 illustrates a state where the coupling cord 19 is embedded to a neighborhood of the front end of the first fitting part 21. In this case, it is easy to ensure strength of the fitting protrusion 22 in a compression direction.

The hemispheroid 20 and the first fitting part 21 are formed, of a same material as that of the ball 15, at the both ends of the coupling cord 19.

A base end of the first fitting part 21 is formed into a hemispheroid similar to that of the end of the ball 15, and the fitting protrusion 22 of a round shank shape is formed at the front end of the first fitting part 21. The fitting protrusion 22 has a swelled portion 22a of a flange shape formed at a front end thereof, and an external shape of the swelled portion 22a has a diameter smaller than a maximum diameter of the hemispheroid-shaped base end. Further, a chamfered edge 22b is formed at a front end-side corner of the swelled portion 22a, so that the swelled portion 22a can be easily fitted into a fitting hole 26.

The first fitting part 21 is molded integrally with the other end of the coupling cord 19. Further, the fitting protrusion 22 may be formed by molding in a similar way to that of the hemispheroid 20, followed by cutting.

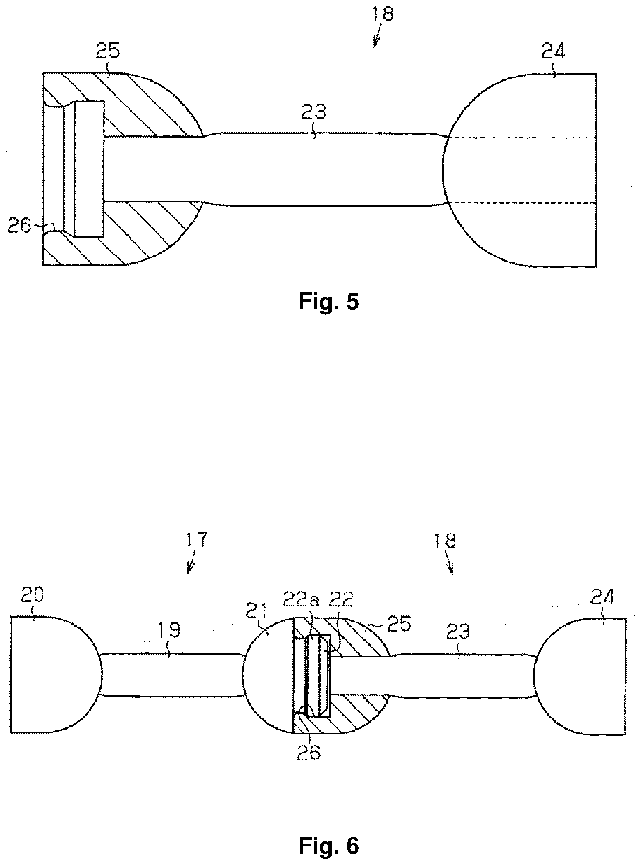

The second coupling member 18 has, as shown in Fig. 5, a hemispheroid 24 having a shape of a half of the ball 15 formed at an end of a coupling cord 23 which is made of a same material as that of the cord 14, and a second fitting part 25 formed at the other end. A space between the hemispheroid 24 and the second fitting part 25 is the same as the space between the balls 15.

The hemispheroid 24 and the second fitting part 25 are formed at both ends of the coupling cord 23 by means of outsert molding of a same material as that of the ball 15.

A base end of the second fitting part 25 is formed into a hemispheroid shape similar to the end of the ball 15, and the fitting hole 26 is formed at a front end of the second fitting part 25. Further, a deep section of the fitting hole 26 is formed to have a diameter which is larger than a diameter of an opening portion thereof, so that, as shown in Fig. 6, the deep section can fit resiliently with and hold the swelled portion 22a of the fitting protrusion 22.

Moreover, the fitting hole 26 is formed to have a depth that is equal to or smaller than a half of a length of the second fitting part 25, and the fitting protrusion 22 protrudes by a length that is equal to the depth of the fitting hole 26.

A holding force of the fitting hole 26 to hold the fitting protrusion 22 is so set that the fitting of the fitting protrusion 22 and the fitting hole 26 is never broken with a normal pull force which is applied to the ball chain 9 during a usual operation to move the slats up or down as well as a usual operation to adjust an angle of the slats. Moreover, the fitting of the fitting protrusion 22 and the fitting hole 26 is broken due to resiliency of a synthetic resin, only when a great pull force that exceeds the normal pull force is applied to the ball chain 9.

The fitting hole 26 is formed by forming, at the other end of the coupling cord 23, a hemispheroid similar to the hemispheroid 24, and hollowing out a front center of the hemispheroid by cutting. Further, the first and second fitting parts are so formed that, in a state where the fitting protrusion 22 is fitted in the fitting hole 26, as shown in Figs. 2 and 6, an external shape of the first and second fitting parts is the same as that of the ball 15.

The depth of the fitting hole 26 is set smaller than a half of the length of the second fitting part 25, and thus, the base end of the second fitting part 25 is a solid body. Accordingly, it is possible to ensure that the part of the coupling cord 23 which is embedded in the second fitting part 25 has a sufficient length.

The hemispheroids 20, 24 of the first and second coupling members 17, 18 are fused to hemispheroids 15a formed at the both ends of the cord 14, forming balls of a same shape as that of the ball 15. When the fitting protrusion 22 is fitted in the fitting hole 26, the ball chain 9 of an endless type is obtained.

According to the ball chain 9 thus configured, balls having a same shape are formed at regular intervals along the entire length of the cord 14 of the ball chain 9 and the coupling cords 19, 23 of the coupling portion 16. Therefore, the ball chain 9 can be moved around unlimitedly relative to the pulley 8.

According to the ball chain configured as described above, the following effects can be obtained.
(1) Balls having a same shape are formed at regular intervals along the entire length of the cord 14 of the ball chain 9 and the coupling cords 19, 23 of the coupling portion 16. Therefore, it is possible to move around the ball chain 9 unlimitedly relative to the pulley 8, to perform an operation for moving the slats up and down.
(2) When a great pull force exceeding a normal pull force is applied to the ball chain 9, the fitting of the fitting protrusion 22 and the fitting hole 26 of the coupling portion 16 is broken. Therefore, it is possible to provide a fail-safe function, such that if the endless ball chain 9 is caught by a dweller moving in the room or by another moving object, the ball chain 9 is cut to ensure the safety of the dweller, and to avoid damages to the pulley 8 with which the ball chain 9 engages, and other parts.
(3) After the fitting of the fitting protrusion 22 and the fitting hole 26 of the coupling portion 16 is broken, the fitting protrusion 22 and the fitting hole 26 can be fitted with each other again, so that the endless ball chain 9 is easily reconstructed.
(4) Since the fitting protrusion 22 of a round shank shape formed at the first fitting part 21 of a hemispheroid shape is made to be a solid body as far as the front end thereof, and to fit in the fitting hole 26 bored in the second fitting part 25 of a hemispheroid shape, it is possible to ensure a holding force to hold the fitting protrusion 22 in the fitting hole 26.
(5) Owing to the chamfered edge 22b provided at the front end of the swelled portion 22a, the swelled portion 22a can be easily fitted in the fitting hole 26, as well as breakage of the opening portion of the fitting hole 26 which may occur when it is fitted with the swelled portion22a can be prevented.
(6) Since the part of the coupling cord 23 which part is embedded in the second fitting part 25 can be ensured to have a sufficient length, a sufficient joint force is ensured between the second fitting part 25 and the coupling cord 23.
(7) As shown in Fig. 3, the first fitting part 21 is formed by means of outsert molding of a solid body such that the coupling cord 19 is embedded from the front end through the rear end thereof, so that a sufficient joint strength is ensured between the first fitting part 21 and the coupling cord 19.
(8) Since the joint distance between the second fitting part 25 and the coupling cord 23 is set to be at least a half of the length of the second fitting part 25, a sufficient joint strength between the second fitting part 25, which is formed by outsert molding onto the coupling cord 23, and the coupling cord 23 is ensured.

### (Second Embodiment)

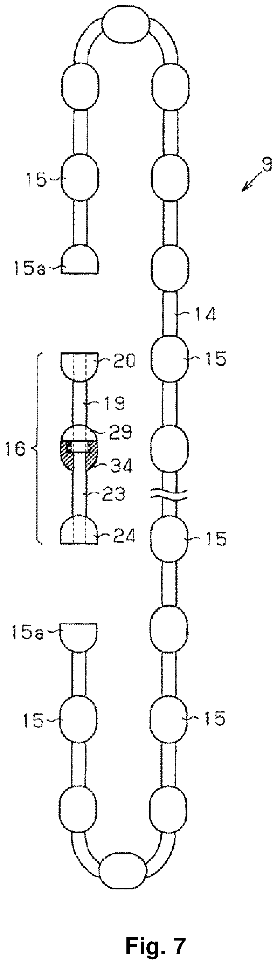

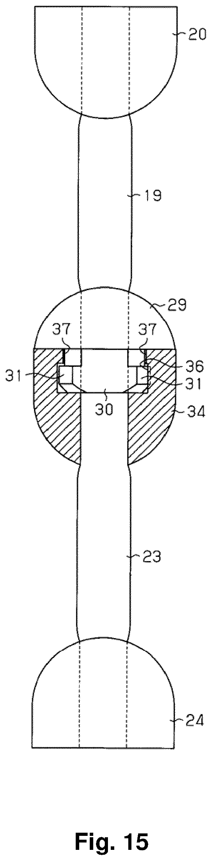

A second embodiment of the present invention will be described with reference to Figs. 7 to 15. In this embodiment, the "operation cord" of the claims is a ball chain 9, and the "coupling portion" is composed of a first coupling member 27 and a second coupling member 28. The first coupling member 27 has a fitting protrusion 30 of a solid body.

Hereafter the embodiment will be described in further detail.

As shown in Fig. 7, balls 15 of a synthetic resin are molded at regular intervals on a cord 14 of polyester to form the ball chain 9. Each ball 15 is a solid body molded on a surface of the cord 14 to have a prolate spheroid shape by a molding machine, and each ball 15 is firmly fixed to the cord 14 so as to be immovable.

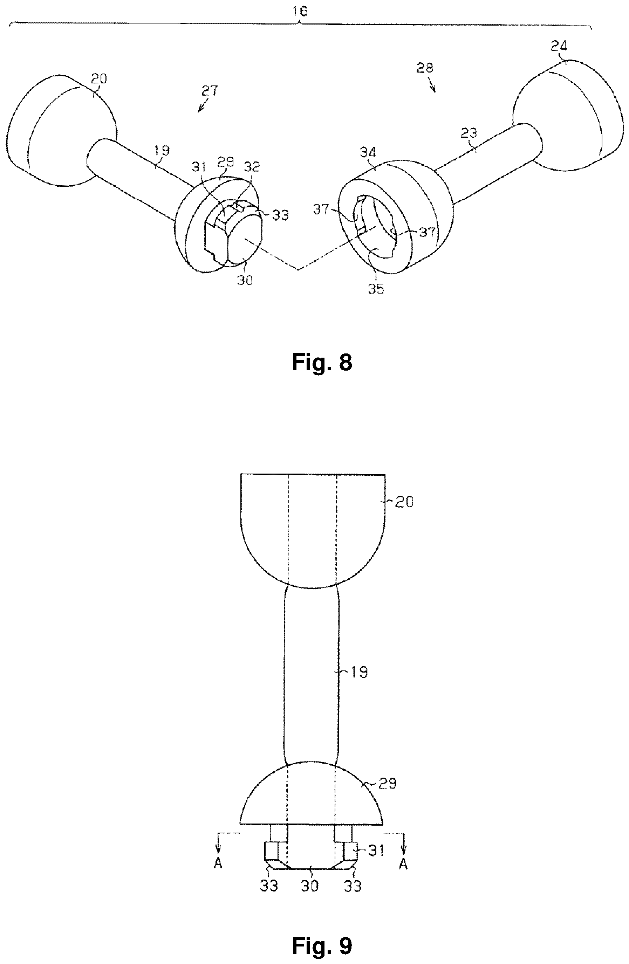

Both ends of the cord 14 are coupled to each other by means of the coupling portion 16 to form the endless-type ball chain 9. As shown in Fig. 8, the coupling portion 16 is composed of a first coupling member 27 and a second coupling member 28.

In the first coupling member 27, as shown in Fig. 9, a hemispheroid 20 which has a shape of a half of the ball 15 is formed by outsert molding onto an end of a coupling cord 19 made of a same material as that of the cord 14, and a first fitting part 29 is formed at the other end. A space between the hemispheroid 20 and the first fitting part 29 is the same as the space between the balls 15.

The hemispheroid 20 and the first fitting part 29 are formed, of a same synthetic resin as that of the ball 15, at the both ends of the coupling cord 19.

A base end of the first fitting part 29 is formed into a hemispheroid similar to that of the end of the ball 15, and at a front end of the first fitting part 29 is formed a fitting protrusion 30 having a bale-shaped cross-section, which is obtained by cutting off both sides of a round shank along parallel lines.

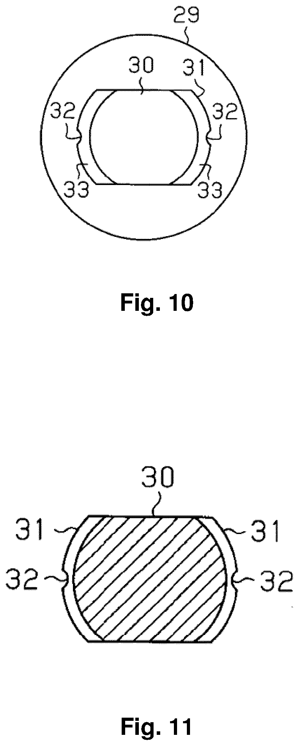

At a front end of the fitting protrusion 30, as shown in Figs. 10 and 11, a swelled portion 31 being swelled in a long-axis direction of a bale shape is formed, and outer peripheral surfaces on both sides in the long-axis direction of the swelled portion 31 are provided with troughs 32 in an axis direction of the first fitting part 29. Further, a chamfered edge 33 is formed at a front end corner of the swelled portion 31.

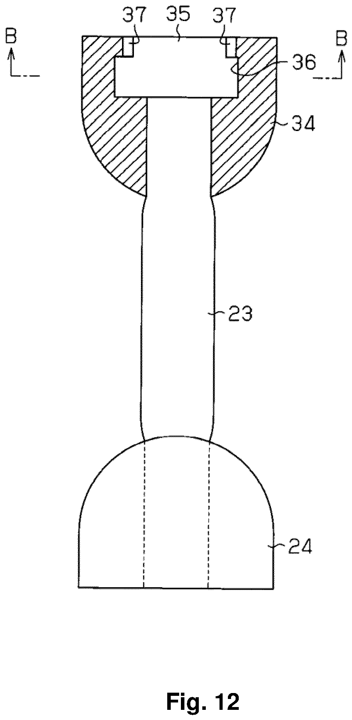

The second coupling member 28 has, as shown in Figs. 8 and 12, a hemispheroid 24 having a shape of a half of the ball 15 formed at an end of a coupling cord 23 which is made of a same material as that of the cord 14, and a second fitting part 34 formed at the other end. The hemispheroid 24 and the second fitting part 34 are molded from a same synthetic resin as that of the ball 15, and a space between the hemispheroid 24 and the second fitting part 34 is the same as the space between the balls 15. The hemispheroid 24 and the second fitting part 34 are formed at both ends of the coupling cord 23 from a same material as that of the ball 15.

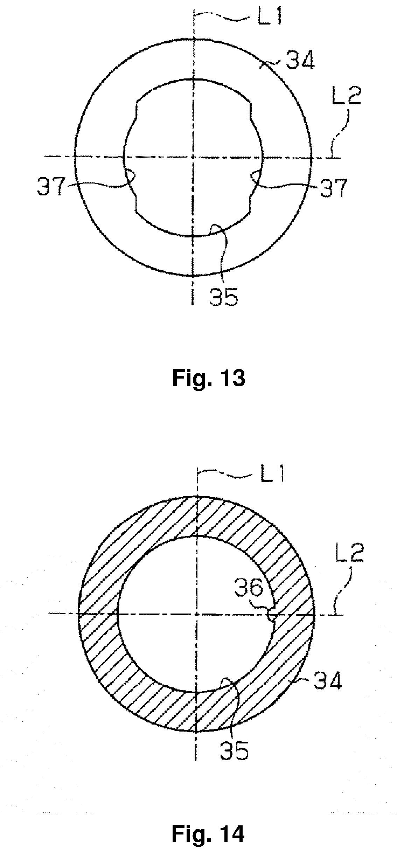

A base end of the second fitting part 34 is formed into a hemispheroid shape similar to the end of the ball 15, and a fitting hole 35 is formed at a center of a front end surface of the second fitting part 34. The fitting hole 35 is opened, as shown in Fig. 13, to have a bale shape in which the swelled portion 31 of the fitting protrusion 30 can be inserted.

A deep section of the fitting hole 35 is formed, as shown in Figs. 12 and 14, into a circular shape with a diameter which allows the fitting protrusion 30 to rotate within the fitting hole 35. Therefore, locking portions 37 are formed line-symmetrically which engage with the swelled portion 31 at an opening portion of the fitting portion 35. An opening edge of the locking portion 37 is gouged into an arc in order to allow a base portion of the fitting protrusion 30 to rotate.

A ridge 36 which can engage with the trough 32 is formed on one side of an inner peripheral surface of the deep section of the fitting hole 35. The ridge 36 is formed on a short axis L2 which intersects with a long axis L1 of the opening of the fitting hole 35 at a right angle.

In order to connect the first fitting part 29 and the second fitting part 34, the swelled portion 31 of the fitting protrusion 30 is inserted into the fitting hole 35 and subsequently rotated in either direction from this status. As a result, the trough 32 of the swelled portion 31 engages with the ridge 36 in the fitting hole 35 and is positioned, so that the swelled portion 31 is engaged with the locking portion 37 and held within the fitting hole 35.

A holding force in this engagement is set such that the fitting of the fitting protrusion 30 and fitting hole 35 is never broken with a normal pull force applied to the ball chain 9 in a usual operation for moving up and down the slats and adjusting the angle of the slats. Further, the first fitting part 29 and the second fitting part 34 are so configured that only when a great pull force that exceeds the normal pull force is applied to the ball chain 9, the opening portion of the fitting hole 35 is enlarged by the resiliency of the synthetic resin and thus the swelled portion 31 is pulled out of the fitting hole 35, whereby the fitting of the fitting protrusion 30 and the fitting hole 35 is broken.

Moreover, the first and second fitting parts 29, 34 are formed to have, in a state where the fitting protrusion 30 is fitted with the fitting hole 35, an external shape that is the same as that of the ball 15.

The hemispheroids 20, 24 of the first and second coupling members 27, 28 are fused to the hemispheroids 15a which are formed on the both ends of the cord 14 by means of outsert molding, to form balls each having the same shape as that of the ball 15. When the fitting protrusion 30 is fitted in the fitting hole 35, the ball chain 9 of an endless type is obtained.

According to the ball chain 9 thus configured, balls having a same shape are formed at regular intervals along the entire length of the cord 14 of the ball chain 9 and the coupling cords 19, 23 of the coupling portion 16. Therefore, the ball chain 9 can be moved around unlimitedly relative to the pulley 8.

According to the ball chain configured as described above, the following effects can be obtained.
(1) Balls having a same shape are formed at regular intervals along the entire length of the cord 14 of the ball chain 9 and the coupling cords 19, 23 of the coupling portion 16. Therefore, it is possible to move around the ball chain 9 unlimitedly relative to the pulley 8, to perform an operation for moving the slats up and down.
(2) When a great pull force exceeding a normal pull force is applied to the ball chain 9, the fitting of the fitting protrusion 30 and the fitting hole 35 of the coupling portion 16 is broken. Therefore, it is possible to provide a fail-safe function, such that if the endless ball chain 9 is caught by a dweller moving in the room or by another moving object, the ball chain 9 is cut at the coupling portion 16 to ensure the safety of the dweller, and to avoid damages to the pulley 8 with which the ball chain 9 engages, and other parts.
(3) After the fitting of the fitting protrusion 30 and the fitting hole 35 of the coupling portion 16 is broken, the fitting protrusion 30 and the fitting hole 35 can be fitted with each other again, so that the endless ball chain 9 is easily reconstructed.
(4) Since a configuration is adopted where the swelled portion 31 of the fitting protrusion 30 is inserted into the fitting hole 35 and subsequently rotated by 90 degrees to achieve the fitting of the fitting protrusion 30 and the fitting hole 35, it is possible to ensure a sufficient force for holding the fitting protrusion 30 within the fitting hole 35 while the force needed for fitting the fitting protrusion 30 with the fitting hole 35 is minimized.
(5) Since the operation force needed for fitting the fitting protrusion 30 with the fitting hole 35 is weak, it is possible to fit the fitting protrusion 30 with the fitting hole 35 again without using a tool. Therefore, if the coupling at the coupling portion 16 is broken, the dweller can easily restore the coupling.
(6) It is easy to fit the fitting protrusion 30 with the fitting hole 35 thanks to the chamfered edge 33 provided at the front end of the fitting protrusion 30.
(7) It is possible to support the base end of the fitting protrusion 30 so as to be rotatable by an arc-shaped peripheral surface of the locking portions 37.

The above embodiment may be carried out in the following mode.

The first fitting part 29 and the second fitting part 34 may be formed of a material having rigidity larger than that of a synthetic resin. In this case, the failsafe function may not be obtained, but even when a great force is applied to the ball chain 9, it is not converted into a non-loop form, so that abrupt non-looping can be avoided.

### (Third Embodiment)

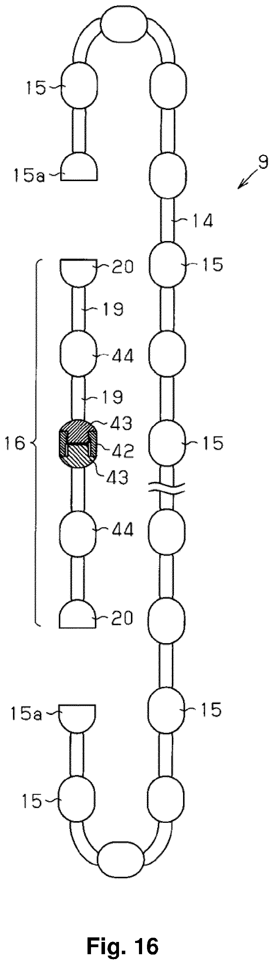

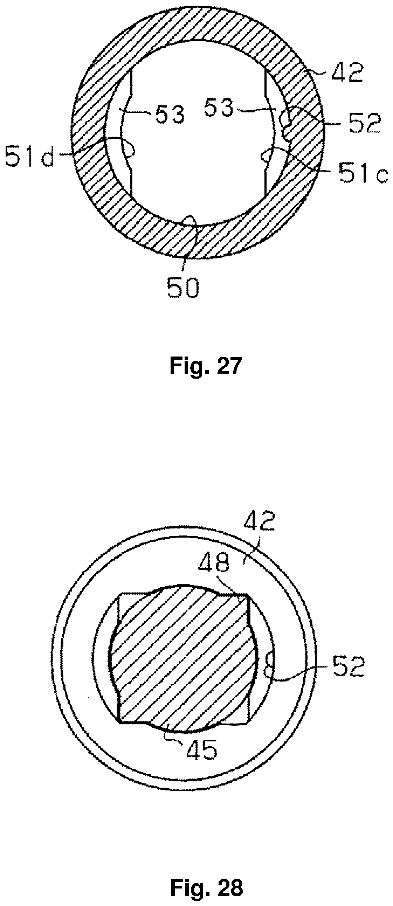

A third embodiment of the present invention will be described with reference to Figs. 16 to 28. In this embodiment, the "operation cord" of the claims is a ball chain 9, and the "coupling portion" is composed of two first coupling members 41 of a same structure and a second coupling member 42 of a tubular shape. The two first coupling members 41 are coupled to each other via the second coupling member 42. The first coupling member 41 has a fitting protrusion 45 of a solid body.

Hereafter the embodiment will be described in further detail.

As shown in Fig. 16, balls 15 of a synthetic resin are molded at regular intervals on a cord 14 of polyester to form the ball chain 9. Each ball 15 is a solid body molded on a surface of the cord 14 to have a prolate spheroid shape by a molding machine, and each ball 15 is firmly fixed to the cord 14 so as to be immovable.

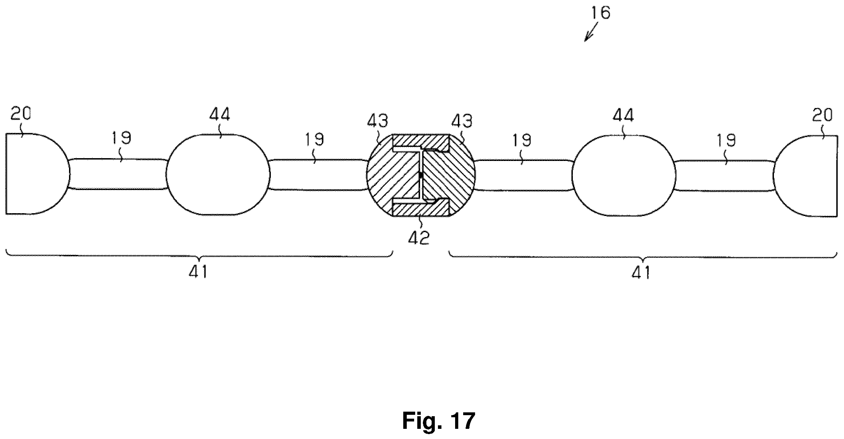

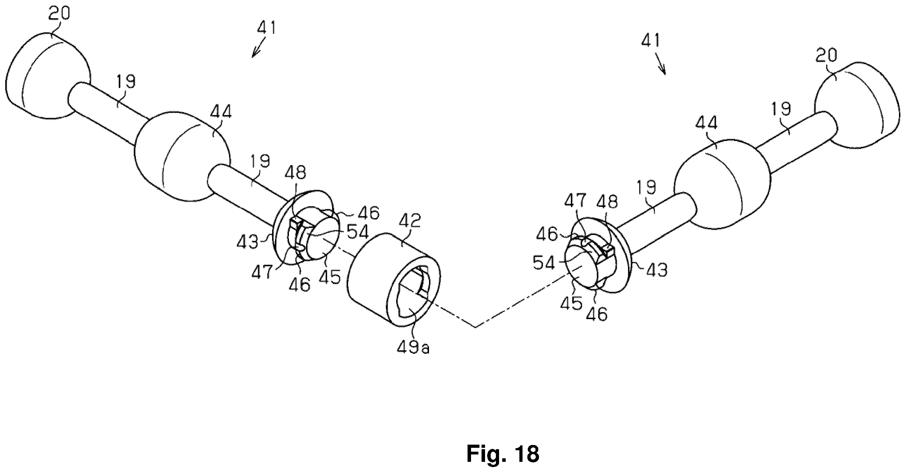

Both ends of the cord 14 are coupled to each other by means of the coupling portion 16 to form the endless-type ball chain 9. As shown in Figs. 17 and 18, the coupling portion 16 is configured such that the two first coupling members 41 of the same structure are coupled with each other via the second coupling member (second fitting part) 42.

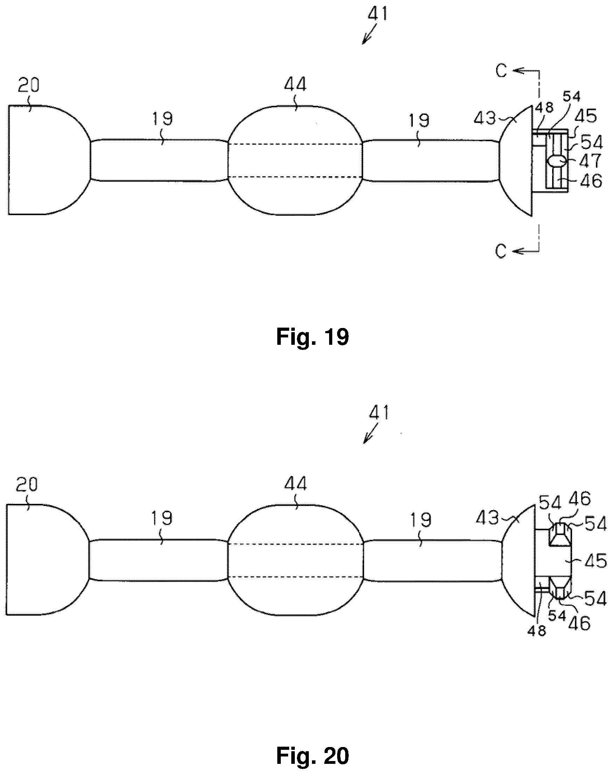

In the first coupling member 41, as shown in Fig. 19, a hemispheroid 20 which has a shape of a half of the ball 15 is formed (outsert molding) onto an end of a coupling cord 19 made of a same material as that of the cord 14, and a first fitting part 43 is formed at the other end. A ball 44 having a same shape as that of the ball 15 is fixed between the hemispheroid 20 and the first fitting part 43, and a space between the first fitting part 43 and the ball 44 and a space between the ball 44 and the hemispheroid 20 are the same as the space between the balls 15.

The hemispheroid 20 and the first fitting part 43 are formed, of a same synthetic resin as that of the ball 15, at the both ends of the coupling cord 19.

A base end of the first fitting part 43 is formed into a hemispheroid similar to that of the end of the ball 15, and at the front end of the first fitting part 43 is formed (outsert molding) a fitting protrusion 45 of a round shank shape.

On an outer peripheral surface of a front end of the fitting protrusion 45, as shown in Figs. 18 to 21, swelled portions 46 are formed line-symmetrically with respect to a center of the round shank, and a trough 47 having a semicircular cross-section is formed at a center of each of the swelled portions 46. Further, chamfered edges 54 are formed at a front end side and a base end side of the swelled portion 46.

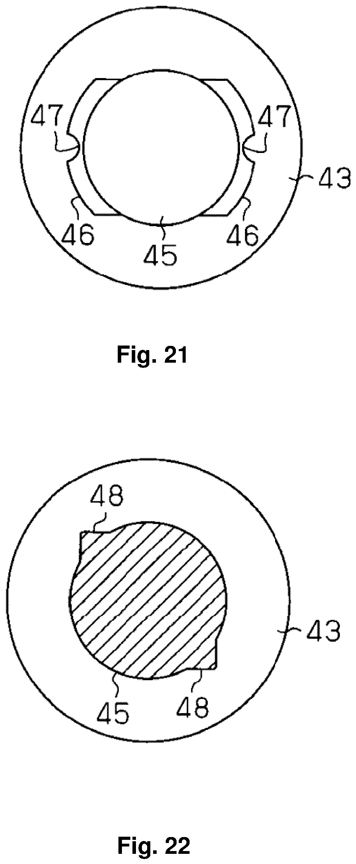

At a base end of the fitting protrusion 45, as shown in Figs. 18 and 22, rotation-restriction portions 48 protruding in radial directions of the round shank are formed line-symmetrically with respect to the center of the round shank. Further, each of the rotation-restriction portions 48 is formed at a position apart by 45 degrees in a circumferential direction from the trough 47 with respect to the center of the round shank.

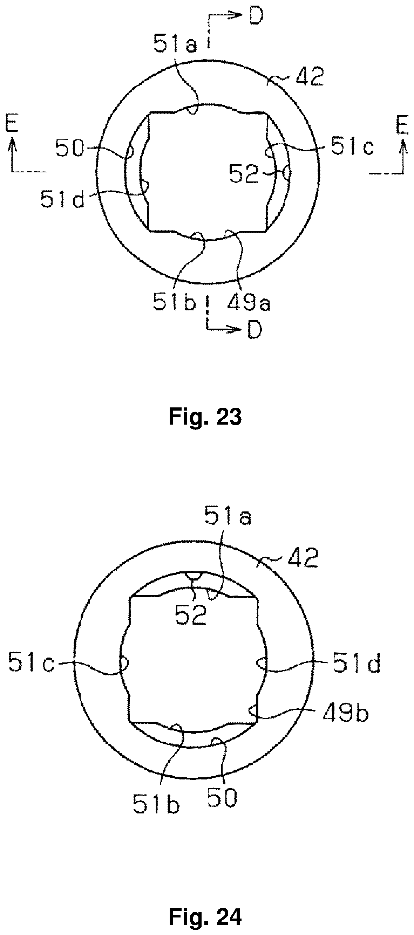

The second coupling member 42 is formed, by molding a same synthetic resin as that of the first fitting part 43 and the balls 15, 44, into a tubular shape so as to be a second fitting part provided with a fitting hole, and configured, as shown in Figs. 23 and 24, such that opening portions 49a, 49b at both sides thereof each have a bale shape into which the front end including the swelled portion 46 of the fitting protrusion 45 can be inserted. Further, the opening portions 49a, 49b are so shaped that directions of the bale shapes are mutually rotated by 90 degrees with respect to a center of the tube.

A circular hole (fitting hole) 50 having a diameter which allows the front end of the fitting protrusion 45 to rotate is formed inside the second coupling member 42. At opening edges in short-axis directions of the bale shape of the opening portion 49a, locking portions 51a, 51b are formed, respectively, for preventing the swelled portion 46 from dropping out of the circular hole 50, and at opening edges in the short-axis directions of the bale shape of the opening portion 49b, locking portions 51c, 51d are formed, respectively, for preventing the swelled portion 46 from dropping out of the circular hole 50.

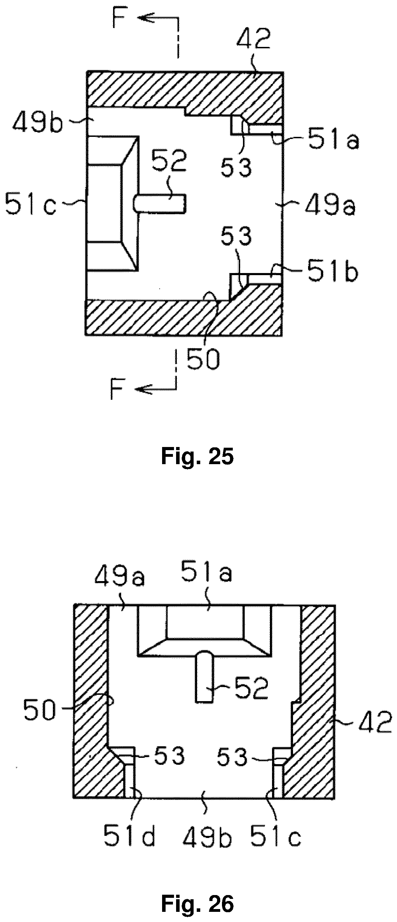

As shown in Figs. 25 and 26, chamfered edges 53 are provided at boundary portions between the locking portions 51a-51d and the circular hole 50, so that the locking portions 51a-51d are not damaged when the fitting protrusion 45 is pulled out of the circular hole 50, due to working of the chamfered edges 53, 54.

On an inner peripheral surface of the circular hole 50, at inner sides of the locking portions 51a, 51c, ridges 52 configured to engage with the troughs 47 are formed, respectively.

In order to connect the first coupling member 41 and the second coupling member 42, the fitting protrusion 45 of the first fitting part 43 is inserted into one opening portion 49a, and the first fitting part 43 is rotated clockwise by 90 degrees relative to the second coupling member 42. As a result, the trough 47 of the swelled portion 45 engages with the ridge 52 in the circular hole 50, so that the rotation-restriction portion 48 moves from a corner portion of the bale shape of the opening portion 49a to a neighboring corner portion, where it is positioned.

Also, the fitting protrusion 45 of the first coupling member 41 is inserted into the other opening portion 49b of the second coupling member 42 and rotated by 90 degrees, to be positioned. As a result, as shown in Fig. 17, the first coupling members 41 are coupled to each other via the second coupling member 42.

In this state, the swelled portion 46 of the fitting protrusion 45 of each first coupling member engages with the locking portions 51a-51d of the second coupling member 42, and is held within the circular hole 50 of the second coupling member 42.

A holding force in this engagement is set such that the fitting protrusion 45 is never disengaged from the second coupling member 42 with a normal pull force applied to the ball chain 9 in a usual operation for moving up and down the slats and adjusting the angle of the slats. Further, the first and second coupling members are so configured that only when a great pull force that exceeds the normal pull force is applied to the ball chain 9, the opening portions 49a, 49b of the second coupling member 42 are enlarged due to resiliency of the synthetic resin of the second coupling member 42, and thus, the fitting protrusions 45 are uncoupled from the second coupling member 42.

Moreover, an external shape in a state where the first fitting parts 43 are fitted with the both sides of the second coupling member 42 is so designed as to be the same as that of the ball 15.

The hemispheroid 20 of the first coupling member 41 is fused and fixed to the hemispheroid 15a outsert molded on the both ends of the cord 14, forming a ball of the same shape as that of the ball 15.

Further, when the first coupling members 41 are connected via the second coupling member 42, the ball chain 9 of an endless type is obtained.

According to the ball chain 9 thus configured, balls having a same shape are formed at regular intervals along the entire length of the cord 14 of the ball chain 9 and the coupling cord 19 of the coupling portion 16. Therefore, the ball chain 9 can be moved around unlimitedly relative to the pulley 8.

According to the ball chain configured as described above, the following effects can be obtained.
(1) Balls having a same shape are formed at regular intervals along the entire length of the cord 14 of the ball chain 9 and the coupling cord 19 of the coupling portion 16. Therefore, it is possible to move around the ball chain 9 unlimitedly relative to the pulley 8, to perform an operation for moving the slats up and down.
(2) When a great pull force exceeding a normal pull force is applied to the ball chain 9, the fitting of either of the first coupling members 41 and the second coupling member 42 of the coupling portion 16 is broken. Therefore, if the endless ball chain 9 is caught by a dweller moving in the room or by another moving object, the ball chain 9 is cut at the coupling portion 16 to ensure the safety of the dweller, and to avoid damages to the pulley 8 with which the ball chain 9 engages, and other parts.
(3) After the fitting of the coupling portion 16 is broken, the first coupling members 41 and the second coupling member 42 can be fitted with each other again, so that the endless ball chain 9 is easily reconstructed.
(4) Since a configuration is adopted where the fitting protrusions 45 are inserted into the opening portions 49a, 49b and subsequently rotated by 90 degrees to achieve the fitting of the fitting protrusion 45 and the second coupling member 42, it is possible to ensure a sufficient force for holding the fitting protrusion 45 by the second coupling member 42 while the force needed for fitting the fitting protrusion 45 with the second coupling member 42 is minimized.
(5) The pair of the first coupling members 41 which are coupled by the second coupling member 42 are held at an angle such that central lines of the fitting protrusions 45 intersect with each other at a right angle. Therefore, when a pull force is applied to each fitting protrusion 45, the swelled portion 46 of each fitting protrusion 45 works on the opening portions 49a, 49b of the second coupling member 42 in directions which are different from each other by 90 degrees, that is, the swelled portion 46 so works as to expand the second coupling member 42 in four directions from the center thereof, whereby the holding force can be easily ensured.
(6) When the fitting protrusion 45 is pulled out of the circular hole 50, it is possible to avoid damaging the locking portions 51a-51d thanks to the chamfered edge 53.
(7) Since a configuration is adopted where a pair of first coupling members 41 are connected by means of a second coupling member 42, and the first and second coupling members 41, 42 are easily molded from a synthetic resin, the coupling portion 16 can be formed easily.
(8) Since the operation force needed for fitting the fitting protrusion 45 with the tubular second coupling member 42 is weak, it is possible to fit the fitting protrusion 45 with the second coupling member 42 again without using a tool. Therefore, if the coupling at the coupling portion 16 is broken, the dweller can easily restore the coupling.
(9) The first fitting part 43 can be formed easily at the end of the coupling cord 19 by means of outsert molding.

The above embodiment may be carried out in the following mode.

The first fitting part 43 and the second coupling member 42 may be formed of a material having a rigidity larger than that of a synthetic resin. In this case, the failsafe function may not be obtained, but even when a great force is applied to the ball chain 9, it is not converted into a non-loop form, so that abrupt non-looping can be avoided.

The coupling portion 16 may be employed in an endless-type operation cord of an apparatus for shielding sunlight such as a vertical blind and a roller blind.

The angle by which the first coupling member 41 is rotated relative to the second coupling member 42 when the first and second coupling members are fitted may be an angle other than 90 degrees.

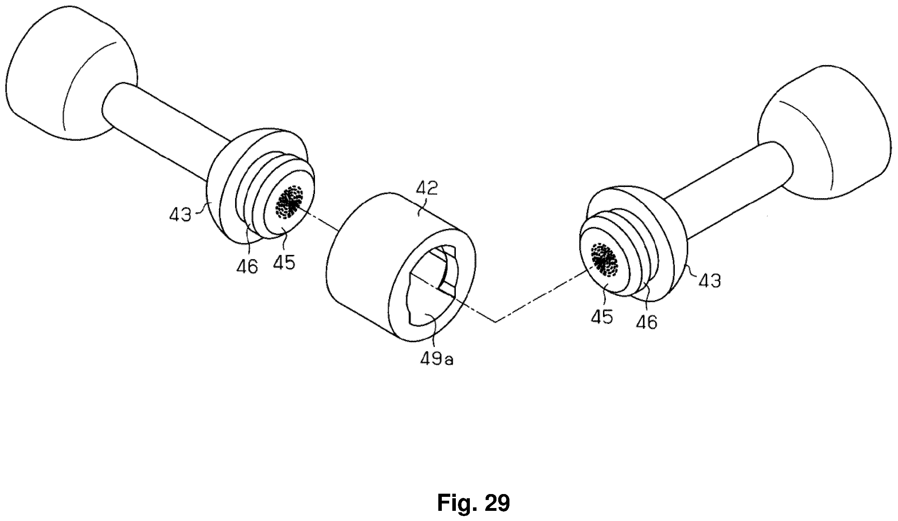

As shown in Fig. 29, a swelled portion 46 may be formed around the entire circumference of the outer peripheral surface of the fitting protrusion 45 of the first fitting part 43, and the fitting protrusion 45 may be configured to fit with the opening portions 49a, 49b of the second coupling member 42.

A step having a cross-section of a right angle may be provided in place of the chamfered edge 53 in the second coupling member 42.

In the first to third embodiments, a junction surface between the hemispheroid 15a and the hemispheroids 20, 24 may be inclined with respect to axes of the hemispheroid 15a and the hemispheroids 20, 24, so that an area of the junction surface is increased.

In the first to third embodiments, the coupling portion 16 may be provided at a middle portion of an operation cord hanging from a head box of a horizontal blind and connected to a bottom rail, to have a failsafe function.

### (Fourth Embodiment)

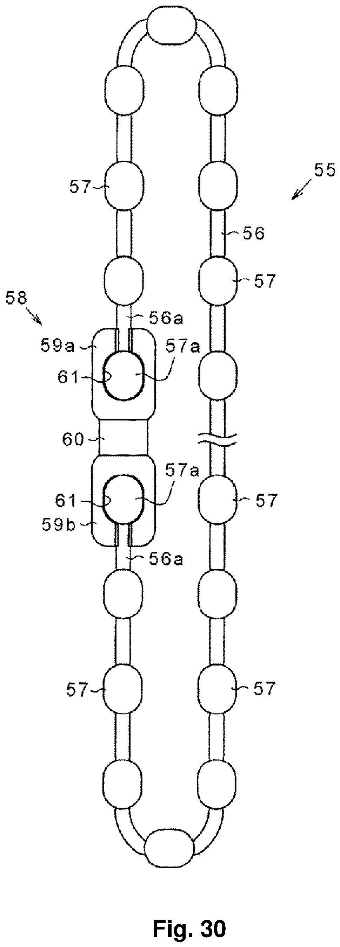

A fourth embodiment of the present invention will be described with reference to Figs. 30 to 42. In this embodiment, the "operation cord" of the claims is a ball chain 9, and the "coupling portion" is composed of two connector pieces 59a, 59b of a same structure and a coupling member 60 of a tubular shape. The two connector pieces 59a, 59b are coupled to each other via the coupling member 60. The connector pieces 59a, 59b each have a fitting protrusion 64 of a solid body.

Hereafter the embodiment will be described in further detail.

The ball chain 55 shown in Fig. 30 has balls 57 of a synthetic resin which are molded at regular intervals on a cord 56 of polyester. Each ball 57 is a solid body molded on a surface of the cord 56 to have a prolate spheroid shape by a molding machine, and each ball 57 is firmly fixed to the cord 56 so as to be immovable.

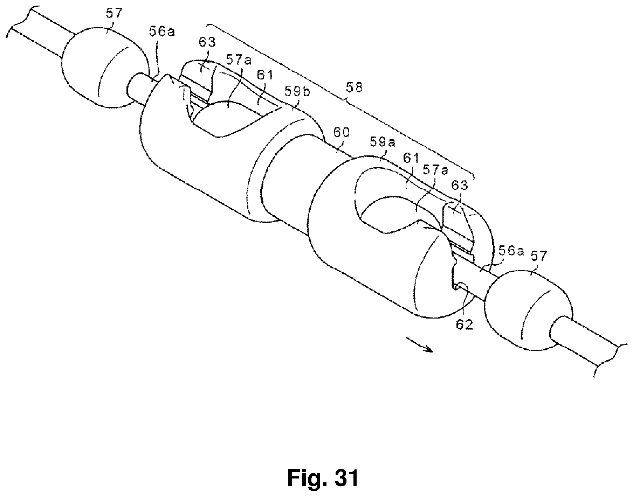

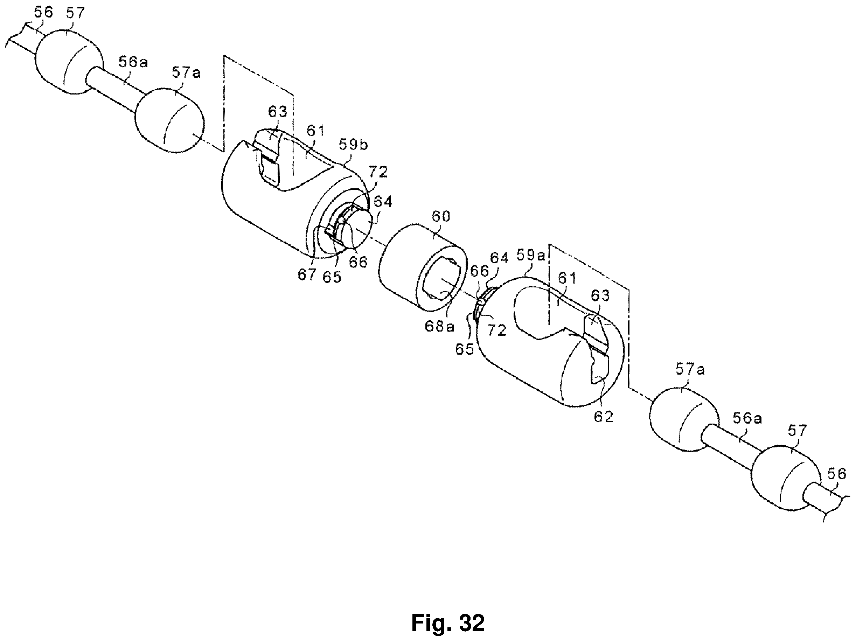

Both ends of the cord 56 are coupled to each other by means of a connector 58 to form the endless-type ball chain 55. As shown in Figs. 31 and 32, the connector 58 is configured such that the two connector pieces 59a, 59b of the same structure and the tubular coupling member 60 couple the balls 57a molded at both ends of the cord 56 with each other.

The connector 58 connects the cord 56 to form the endless-type ball chain 55 and also acts, in a state where the ball chain 55 is in engagement with a pulley, as a stopper which abuts on the pulley and a pulley case so as to define an upper limit position of an operation for pulling up a shade or the like. The connector pieces 59a, 59b are formed to have external dimensions that cannot pass through a space between the pulley and the pulley case.

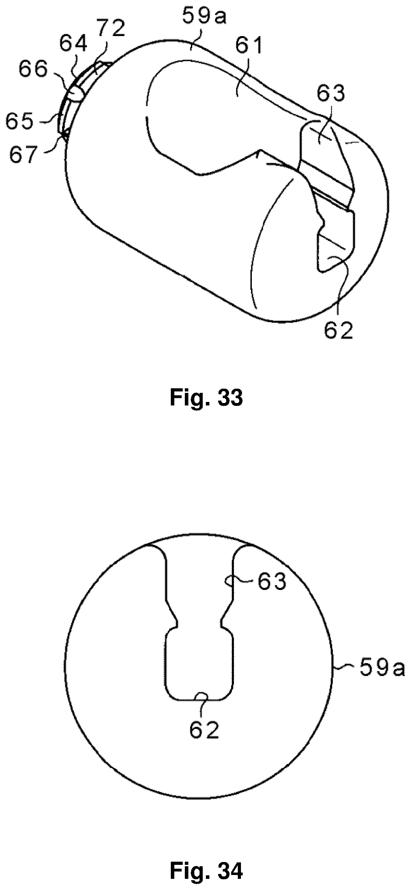

A specific structure of the connector piece 59a will be described with reference to Figs. 33 to 36, since the connector pieces 59a, 59b have the same structure.

The connector piece 59a is formed of a synthetic resin into a generally rectangular parallelepiped, and is provided, on a top surface thereof, with a locking hole 61 which is opened in an ellipse shape such that the ball 57a can be inserted. In a middle portion of a base end surface of the connector piece 59a, as shown in Fig. 34, an insertion hole 62 is formed which continues to the locking hole 61, and the insertion hole 62 opens at the top surface of the connector piece 59a via a guide groove 63.

When the ball 57a formed at the end of the cord 56 is inserted in the locking hole 61 and a cord 56a which continues to the ball 57a is inserted in the insertion hole 62 by way of the guide groove 63, the ball 57a is held within the locking hole 61 such that it cannot be pulled out in a direction indicated by the arrow in Fig. 31.

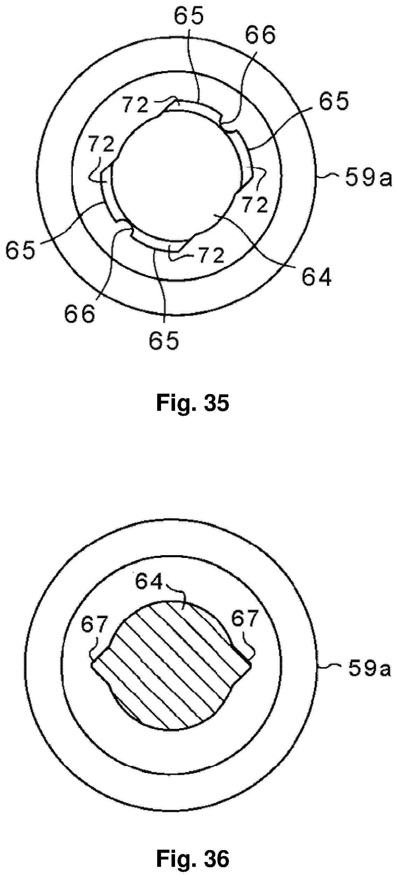

On a front end surface of the connector piece 59a, a fitting protrusion 64 of a round shank shape is formed as a solid body protruding from the surface. As shown in Figs. 33 and 35, on an outer peripheral surface of a front end of the fitting protrusion 64, swelled portions 65 are formed line-symmetrically with respect to a center of the round shank, and a trough 66 having a semicircular cross-section is formed at a center of each of the swelled portions 65. Further, chamfered edges 72 are formed at a front end side and a base end side of the swelled portion 65.

At a base end of the fitting protrusion 64, as shown in Figs. 33 and 36, rotation-restriction portions 67 protruding in radial directions of the round shank are formed line-symmetrically with respect to the center. Moreover, each of the rotation-restriction portions 67 is formed at a position apart from the trough 66 by 45 degrees with respect to the center of the round shank.

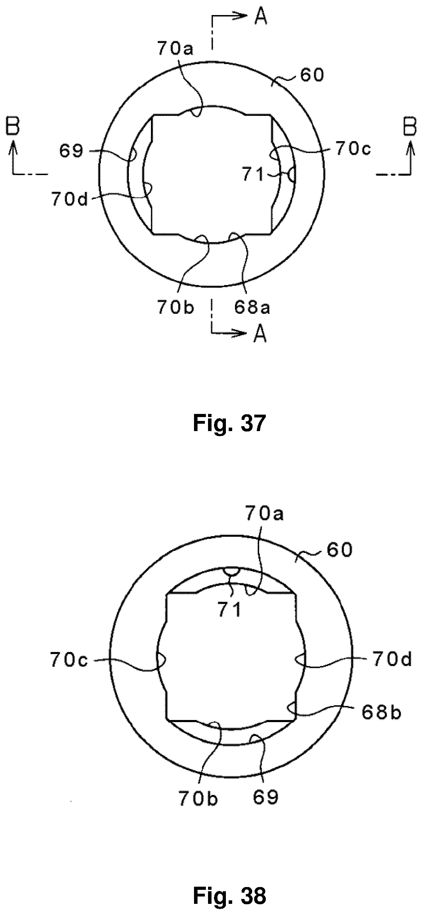

The coupling member 60 is molded into a tubular shape from the same synthetic resin as that of the connector piece 59a, and, as shown in Figs. 37 and 38, opening portions 68a, 68b on both sides are each formed into a bale shape into which the front end including the swelled portion 65 of the fitting protrusion 64 can be inserted. Further, the opening portions 68a, 68b are so formed that directions of their bale shapes are rotated from each other by 90 degrees with respect to a center of the tube.

A circular hole 69 having a diameter which allows the front end of the fitting protrusion 64 to rotate is formed inside the coupling member 60. At opening edges in short-axis directions of the bale shape of the opening portion 68a, locking portions 70a, 70b are formed, respectively, for preventing the swelled portion 65 from dropping out of the circular hole 69, and at opening edges in the short-axis directions of the bale shape of the opening portion 68b, locking portions 70c, 70d are formed, respectively, for preventing the swelled portion 65 from dropping out of the circular hole 69.

On an inner peripheral surface of the circular hole 69, at inner sides of the locking portions 70a, 70c, ridges 71 configured to engage with the troughs 66 are formed, respectively.

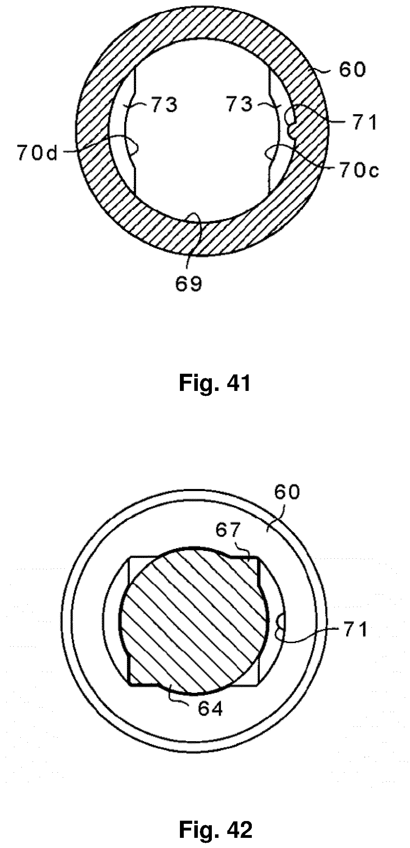

In order to connect the connector piece 59a and the coupling member 60, the fitting protrusion 64 is inserted into one opening portion 68a, and the connector piece 59a is rotated clockwise by 90 degrees relative to the coupling member 60. As a result, the trough 66 of the fitting protrusion 64 engages with the ridge 71 in the circular hole 69, so that the rotation-restriction portion 67 moves from a corner portion of the bale shape of the opening portion 68a to a neighboring corner portion, where it is positioned, as shown in Fig. 42.

Also, the fitting protrusion 64 of the connector piece 59b is inserted into the other opening portion 68b of the coupling member 60 and rotated by 90 degrees, to be positioned. As a result, as shown in Fig. 31, the connector pieces 59a, 59b are coupled to each other via the coupling member 60, and the endless-type ball chain 55 is formed.

In this state, the swelled portion 65 of the fitting protrusion 64 of each of the connector pieces 59a, 59b engages with the locking portions 70a-70d of the coupling member 60, and is held within the circular hole 69 of the coupling member 60.

A holding force in this engagement is set such that the fitting protrusion 64 is never disengaged from the coupling member 60 with a normal pull force applied to the ball chain 55 in a usual operation for moving up and down the slats and adjusting the angle of the slats. Further, the connector pieces and the coupling member are so configured that only when a great pull force that exceeds the normal pull force is applied to the ball chain 55, the opening portions 68a, 68b of the coupling member 60 are enlarged, due to resiliency of the synthetic resin of the coupling member 60, by the swelled portions 65 of the fitting protrusions 64, and thus, the fitting protrusions 64 are uncoupled from the coupling member 60.

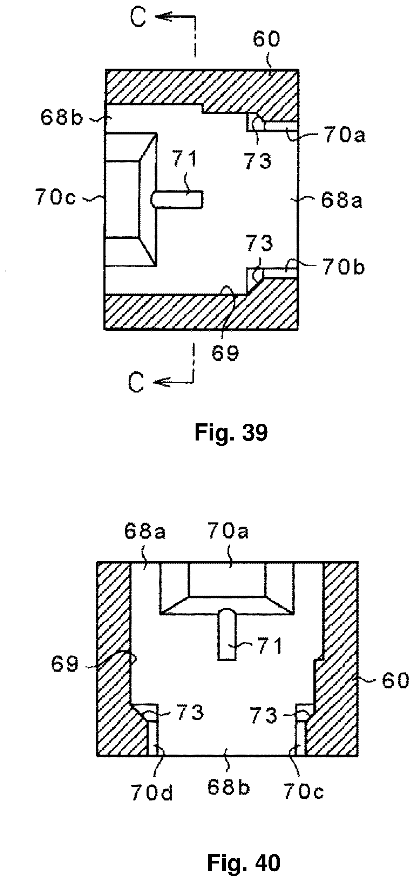

As shown in Figs. 39 to 41, chamfered edges 73 are provided at boundary portions between the locking portions 70a-70d and the circular hole 69, so that the locking portions 70a-70d are not damaged when the fitting protrusion 64 is pulled out of the circular hole 69, due to working of the chamfered edges 72, 73.

According to the ball chain 55 configured as described above, the following effects can be obtained.
(1) When a great pull force exceeding a normal pull force is applied to the ball chain 55, the fitting of either of the connector pieces 59a, 59b of the connector 58 and the coupling member 60 is broken. Therefore, if the endless ball chain 55 is caught by a dweller moving in the room or by another moving object, the ball chain 55 is cut at the connector 58 to ensure the safety of the dweller, and to avoid damages to the pulley with which the ball chain 55 engages, and other parts.
(2) After the connector 59 is cut, the connector pieces 59a, 59b and the coupling member 60 can be fitted with each other again, so that the endless ball chain 55 is easily reconstructed.
(3) Since a configuration is adopted where the fitting protrusions 64 of solid bodies are inserted into the opening portions 68a, 68b of the coupling member 60 and subsequently rotated by 90 degrees to achieve the fitting of the fitting protrusions 64 and the coupling member 60, it is possible to ensure a sufficient force for holding the fitting protrusion 64 by the coupling member 60 while the force needed for fitting the fitting protrusion 64 with the coupling member 60 is minimized.
(4) The pair of the connector pieces 59a, 59b which are coupled by the coupling member 60 are held at an angle such that central lines of the fitting protrusions 64 intersect with each other at a right angle. Therefore, when a pull force is applied to each fitting protrusion 64, the swelled portion 65 of each fitting protrusion 64 works on the opening portions 68a, 68b of the coupling member 60 in directions which are different from each other by 90 degrees, that is, the swelled portion 65 so works as to expand the coupling member 60 in four directions from the center thereof, whereby the holding force can be easily ensured.
(5) Since a configuration is adopted where a pair of the connector pieces 59a, 59b is coupled by means of a tubular coupling member 60, and the connector pieces 59a, 59b and coupling member 60 are easily molded from a synthetic resin, the connector 58 can be formed easily.
(6) Since the operation force needed for fitting the fitting protrusion 64 with the tubular coupling member 60 is weak, it is possible to fit the fitting protrusion 64 with the coupling member 60 again without using a tool. Therefore, if the connector 58 is uncoupled, the dweller can easily restore the coupling.
(7) A common component of a same shape is used for both of the connector pieces 59a, 59b, and thus, a number of components can be reduced.
(8) When the fitting protrusion 64 is pulled out of the circular hole 69, it is possible to avoid damaging the locking portions 70a-70d thanks to the chamfered edges 72, 73.
(9) Since the connector pieces 59a, 59b cannot pass through a gap between a pulley and a pulley case, even if the connector 58 is divided, it is possible to prevent the ball chain 55 from dropping out from the pulley.

The above embodiment may be carried out in the following mode.

Using the connector 58, a ball chain of an endless type of an apparatus for shielding sunlight such as a roller blind, a pleated curtain, and a tuck-up curtain may be formed.

The connector 58 may be used as a connector for connecting, into an endless form, a ball chain for holding a name plate or the like hanging from the neck.

The angle by which the connector pieces 59a, 59b are rotated relative to the coupling member 60 when the connector pieces 59a, 59b are fitted with the coupling member 60 may be an angle other than 90 degrees.

The ball chain 55 may be a string-type cord which is provided with balls only at both ends thereof.

The present invention has been described based on a various embodiments thus far, however, the present invention is not limited to the embodiments shown above.

### DESCRIPTION OF NUMERALS

9 ... ball chain; 14 ... cord; 15, 44 ... ball; 15a, 20, 24 ... hemispheroid; 16 ... coupling portion; 17, 27, 41, 61 ... first coupling member; 18, 28, 42, 62 ... second coupling member; 19 ... coupling cord; 21, 29, 63 ... first fitting part; 22, 30, 45, 65 ... fitting protrusion; 23 ...coupling cord; 25, 34 ... second coupling part; 26, 35, 67 ... fitting hole; 55 ... ball chain; 56, 56a ... cord; 57, 57a ... a ball; 58 ... connector; 59a, 59b ... connector piece; 60 ... coupling member; 61 ... locking hole; 62 ... insertion hole; 63 ... guide groove; 64 ... fitting protrusion; 65 ... swelled portion; 66 ... trough; 67 ... rotation-restriction portion; 68a, 68b ... opening portion; 69 ... circular hole; 70a-70d ... locking portion; 71 ... ridge; 72, 73 ... chamfered edge

## Claims

1. An operation cord (9, 55) comprising a cord (14, 56) whose both ends are coupled by means of a coupling portion (16, 58), **characterized in that**
the coupling portion (16, 58) has a first coupling part (17, 27, 41, 59a, 59b) and a second coupling part (18, 28) which are coupled with each other directly or via a coupling member (42, 60),
one of the coupling parts (17, 27, 41, 59a, 59b) or the coupling member (42, 60) adjacent to each other has a fitting protrusion (22, 30, 45, 64), and the other of the coupling parts (18, 28) or the coupling member (42, 60) adjacent to each other has a fitting hole (26, 35, 50, 69) capable of fitting with the fitting protrusion (22, 30, 45, 64), and
the fitting protrusion (22, 30, 45, 64) is capable of fitting with the fitting hole (26, 35, 50, 69) through being inserted into the fitting hole (26, 35, 50, 69) and subsequently rotated.

2. The operation cord (9, 55) of claim 1, wherein balls (15, 57) of a synthetic resin are molded and firmly fixed to the cord (14, 56) at regular intervals.

3. The operation cord (9, 55) of claim 1 or 2, wherein the fitting protrusion (22, 30, 45, 64) is provided with a swelled portion (22a, 31, 46, 65), and the fitting hole (26, 35, 50, 69) is provided with a locking portion (37, 51a-d, 70a-d) configured to engage with the swelled portion (22a, 31, 46, 65).

4. The operation cord (9, 55) of any one of claims 1 to 3, wherein an inner peripheral surface of the fitting hole (26, 35, 50, 69) is provided with positioning means (36, 52, 71) configured to position the fitting protrusion (22, 30, 45, 64) rotationally.

5. The operation cord (9) of any one of claims 1 to 4, wherein
the first coupling part (17, 27, 41, 59a, 59b) has a first fitting part (21, 29, 43) which is provided with the fitting protrusion (22, 30, 45) at an end of a first coupling cord (19); and
the second coupling part (18, 28) has a second fitting part (25, 34, 43) which is provided with the fitting protrusion (22, 30, 45) or the fitting hole (26, 35, 50) at an end of a second coupling cord (23),
wherein a hemispheroid (20, 24) provided at the other end of each coupling cord (19, 23) and a hemispheroid (15a) provided at each end of the cord (14) are fused to each other so as to form the ball.

6. The operation cord (9) of claim 5, wherein the fitting protrusion (22, 30, 45) is formed at the end of the first coupling cord (19) by means of outsert molding.

7. The operation cord (9) of claim 5 or 6, wherein the second fitting part (25, 34) is formed at the end of the second coupling cord (23) by means of outsert molding, a front end of the second fitting part (25, 34) is provided with the fitting hole (26, 35), and a depth of the fitting hole (26, 35) is equal to or smaller than a half of a length of the second fitting part (25, 34).

8. The operation cord (9, 55) of any one of claims 1 to 6, wherein
the first and second coupling parts (41, 59a, 59b) are coupled with each other via the coupling member (42, 60);
the first and second coupling parts (41, 59a, 59b) are each provided with an axial fitting protrusion (45, 64); and
the coupling member (42, 60) is tubular and has fitting holes (50, 69) at both ends thereof so as to be capable of fitting with the fitting protrusions (45, 64) such that the fitting protrusions (45, 64) face each other.

9. The operation cord (55) of any one of claims 1 to 4, wherein
the first and second coupling parts (41, 59a, 59b) are coupled with each other via the coupling member (42, 60);
the first and second coupling parts (41, 59a, 59b) are a pair of connector pieces (59a, 59b) capable of engaging with balls (57a) attached to the ends of the cord (56) and having axial fitting protrusions (64); and
the coupling member (60) has fitting holes (69) at both ends thereof so as to couple the connector pieces (59a, 59b).

10. The operation cord (55) of claim 9, wherein the pair of connector pieces (59a, 59b) has a same shape.

11. The operation cord (55) of any one of claims 8 to 10, wherein fitting angles at which a pair of the fitting protrusions (64) fit with the coupling member (60) are relatively shifted from each other.

12. A method of manufacturing an operation cord (9) according to any one of claims 1 to 11, comprising the steps of:
molding and firmly fixing balls (15) of a synthetic resin onto a cord (14) at regular intervals;
forming a first fitting part (21, 29, 43) provided with a fitting protrusion (22, 30, 45), at an end of a first coupling cord (19);
forming a hemispheroid (20) corresponding to a half of the ball (15) at the other end of the first coupling cord (19);
forming a second fitting part (25, 34) provided with a fitting hole (26, 35), at an end of a second coupling cord (23), the fitting protrusion (22, 30) and the fitting hole (26, 35) being capable of fitting with and being removed from each other;
forming a hemispheroid (24) corresponding to a half of the ball (15), at the other end of the second coupling cord (23), a shape of the first (21, 29) and second fitting parts (25, 34) when the fitting protrusion (22, 30) is fitted with the fitting hole (26, 35) being the same as that of the ball (15); and
fusing the hemispheroids (20, 24) of the first and second coupling cords (19, 23) to hemispheroids (15a) formed at both ends of the cord (14), so as to form the balls (15).

13. A coupling member (42, 60) capable of being used in the operation cord (9, 55) according to any one of claims 1 to 11, the coupling member (42, 60) composing part of the coupling portion (16, 58) for coupling both ends of the cord (14, 56) by means of fitting of the fitting protrusion (45, 64) and the fitting hole (50, 69), **characterized in that** the fitting protrusion (45, 64) is capable of fitting with the fitting hole (50, 69) through being inserted into the fitting hole (50, 69) and subsequently rotated,
the coupling member (42, 60) is formed into a tubular shape which has the fitting holes (50, 69) at both ends thereof,
a circular hole (50, 69) is formed within the coupling member (42, 60), the circular hole (50, 69) having a diameter allowing a front end of the fitting protrusion (45, 64) to rotate, and
the fitting hole (50, 69) is provided, on part of an inner periphery thereof, with a locking portion (51a-d, 70a-d) having a diameter smaller than that of the circular hole.

14. A coupling part (27, 41) capable of being used in the operation cord (9) according to any one of claims 1 to 8, the coupling part (27, 41) composing part of the coupling portion (16) for coupling both ends of the cord (9) by means of fitting of a fitting protrusion (30, 45) and a fitting hole (35, 50), **characterized in that** the fitting protrusion (30, 45) is capable of fitting with the fitting hole (35, 50) through being inserted into the fitting hole (35, 50) and subsequently rotated,
the coupling part (27, 41) is provided with a base end portion having a hemispheroidal shape, and the fitting protrusion (30, 45) having a round shank shape and protruding from the base end portion toward a front end of the coupling part (27, 41), and
part of a periphery of a front end portion of the fitting protrusion (30, 45) is provided with a swelled portion (31, 46) whose outer peripheral shape seen from the front end is an arc.

15. A connector piece (59a, 59b) capable of being used in the operation cord (55) according to any one of claims 9 to 11, the connector piece (59a, 59b) composing part of a coupling portion (58) for coupling both ends of the cord (56) by means of fitting of a fitting protrusion (64) and a fitting hole (69), **characterized in that** the fitting protrusion (64) is capable of fitting with the fitting hole (69) through being inserted into the fitting hole (69) and subsequently rotated,
the connector piece (59a, 59b) is capable of engaging with a ball (57a) attached to an end of the cord (56) and has a fitting protrusion (64) having an axial shape, and
part of a periphery of a front end portion of the fitting protrusion (64) is provided with a swelled portion (65) whose outer peripheral shape seen from the front end is an arc.

## Patentansprüche

1. Betätigungsschnur (9, 55), die eine Schnur (14, 56) umfasst, deren beide Enden mittels eines Kopplungsabschnitts (16, 58) gekoppelt sind, **dadurch gekennzeichnet, dass**
der Kopplungsabschnitt (16, 58) ein erstes Kopplungsteil (17, 27, 41, 59a, 59b) und ein zweites Kopplungsteil (18, 28) aufweist, die direkt oder über ein Kopplungselement (42, 60) miteinander gekoppelt sind,
eines der Kopplungsteile (17, 27, 41, 59a, 59b) oder das Kopplungselement (42, 60), einander benachbart, einen Passvorsprung (22, 30, 45, 64) aufweist und das andere der Kopplungsteile (18, 28) oder das Kopplungselement (42, 60), einander benachbart, ein Passloch (26, 35, 50, 69), das mit dem Passvorsprung (22, 30, 45, 64) zusammenpassbar ist, aufweist und
der Passvorsprung (22, 30, 45, 64) mit dem Passloch (26, 35, 50, 69) zusammenpassbar ist, indem er in das Passloch (26, 35, 50, 69) eingeführt und nachfolgend gedreht wird.

2. Betätigungsschnur (9, 55) nach Anspruch 1, wobei Kugeln (15, 57) aus einem Kunstharz geformt und in gleichmäßigen Abständen fest an der Schnur (14, 56) befestigt sind.

3. Betätigungsschnur (9, 55) nach Anspruch 1 oder 2, wobei der Passvorsprung (22, 30, 45, 64) mit einem aufgeweiteten Abschnitt (22a, 31, 46, 65) versehen ist und das Passloch (26, 35, 50, 69) mit einem Verriegelungsabschnitt (37, 51a-d, 70a-d) versehen ist, der ausgestaltet ist, mit dem aufgeweiteten Abschnitt (22a, 31, 46, 65) in Eingriff zu stehen.

4. Betätigungsschnur (9, 55) nach einem der Ansprüche 1 bis 3, wobei eine innere periphere Fläche des Passlochs (26, 35, 50, 69) mit Positionierungsmitteln (36, 52, 71) versehen ist, die ausgestaltet sind, den Passvorsprung (22, 30, 45, 64) im Zuge eines Drehens zu positionieren.

5. Betätigungsschnur (9) nach einem der Ansprüche 1 bis 4, wobei
das erste Kopplungsteil (17, 27, 41, 59a, 59b) an einem Ende einer ersten Kopplungsschnur (19) ein erstes Passteil (21, 29, 43) aufweist, das mit dem Passvorsprung (22, 30, 45) versehen ist; und
das zweite Kopplungsteil (18, 28) an einem Ende einer zweiten Kopplungsschnur (23) ein zweites Passteil (25, 34, 43) aufweist, das mit dem Passvorsprung (22, 30, 45) oder dem Passloch (26, 35, 50) versehen ist,
wobei ein halbes Sphäroid (20, 24), das am anderen Ende jeder Kopplungsschnur (19, 23) vorgesehen ist, und ein halbes Sphäroid (15a), das an jedem Ende der Schnur (14) vorgesehen ist, miteinander verschmolzen sind, um die Kugel auszubilden.

6. Betätigungsschnur (9) nach Anspruch 5, wobei der Passvorsprung (22, 30, 45) mittels Outsert-Spritzgießen am Ende der ersten Kopplungsschnur (19) ausgebildet ist.

7. Betätigungsschnur (9) nach Anspruch 5 oder 6, wobei das zweite Passteil (25, 34) mittels Outsert-Spritzgießen am Ende der zweiten Kopplungsschnur (23) ausgebildet ist, ein vorderes Ende des zweiten Passteils (25, 34) mit dem Passloch (26, 35) versehen ist und eine Tiefe des Passlochs (26, 35) gleich oder kleiner als eine(r) Hälfte einer Länge des zweiten Passteils (25, 34) ist.

8. Betätigungsschnur (9, 55) nach einem der Ansprüche 1 bis 6, wobei
das erste und zweite Kopplungsteil (41, 59a, 59b) über das Kopplungselement (42, 60) miteinander gekoppelt sind;
das erste und zweite Kopplungsteil (41, 59a, 59b) jeweils mit einem axialen Passvorsprung (45, 64) versehen sind; und
das Kopplungselement (42, 60) röhrenförmig ist und an beiden Enden davon Passlöcher (50, 69) aufweist, um derart mit den Passvorsprüngen (45, 64) zusammenpassbar zu sein, dass die Passvorsprünge (45, 64) einander zugewandt sind.

9. Betätigungsschnur (55) nach einem der Ansprüche 1 bis 4, wobei
das erste und zweite Kopplungsteil (41, 59a, 59b) über das Kopplungselement (42, 60) miteinander gekoppelt sind;
das erste und zweite Kopplungsteil (41, 59a, 59b) ein Paar von Verbindungsstücken (59a, 59b) sind, die in der Lage sind, mit Kugeln (57a), die an den Enden der Schnur (56) angebracht sind, in Eingriff zu stehen, und axiale Passvorsprünge (64) aufweisen; und
das Kopplungselement (60) an beiden Enden davon Passlöcher (69) aufweist, um die Verbindungsstücke (59a, 59b) zu koppeln.

10. Betätigungsschnur (55) nach Anspruch 9, wobei das Paar von Verbindungsstücken (59a, 59b) eine gleiche Form aufweist.

11. Betätigungsschnur (55) nach einem der Ansprüche 8 bis 10, wobei Passwinkel, mit denen ein Paar der Passvorsprünge (64) mit dem Kopplungselement (60) zusammenpasst, voneinander relativ versetzt sind.

12. Herstellungsverfahren für eine Betätigungsschnur (9) nach einem der Ansprüche 1 bis 11, das folgende Schritte umfasst:
Formen und festes Befestigen von Kugeln (15) aus einem Kunstharz an einer Schnur (14) in gleichmäßigen Abständen;
Ausbilden eines ersten Passteils (21, 29, 43), das mit einem Passvorsprung (22, 30, 45) versehen ist, an einem Ende einer ersten Kopplungsschnur (19);
Ausbilden eines halben Sphäroids (20), das einer Hälfte der Kugel (15) entspricht, am anderen Ende der ersten Kopplungsschnur (19);
Ausbilden eines zweiten Passteils (25, 34), das mit einem Passloch (26, 35) versehen ist, an einem Ende einer zweiten Kopplungsschnur (23), wobei der Passvorsprung (22, 30) und das Passloch (26, 35) miteinander zusammenpassbar und voneinander entfernbar sind;
Ausbilden eines halben Sphäroids (24), das einer Hälfte der Kugel (15) entspricht, am anderen Ende der zweiten Kopplungsschnur (23), wobei eine Form des ersten (21, 29) und zweiten Passteils (25, 34), wenn der Passvorsprung (22, 30) mit dem Passloch (26, 35) zusammengepasst ist, die gleiche ist wie diejenige der Kugel (15); und
Verschmelzen der halben Sphäroide (20, 24) der ersten und zweiten Kopplungsschnur (19, 23) mit halben Sphäroiden (15a), die an beiden Enden der Schnur (14) ausgebildet sind, um die Kugeln (15) auszubilden.

13. Kopplungselement (42, 60), das in der Betätigungsschnur (9, 55) nach einem der Ansprüche 1 bis 11 verwendbar ist, wobei das Kopplungselement (42, 60) einen Teil des Kopplungsabschnitts (16, 58) zum Koppeln beider Enden der Schnur (14, 56) durch Zusammenpassen des Passvorsprungs (45, 64) und des Passlochs (50, 69) bildet, **dadurch gekennzeichnet, dass** der Passvorsprung (45, 64) mit dem Passloch (50, 69) zusammenpassbar ist, indem er in das Passloch (50, 69) eingeführt und nachfolgend gedreht wird,
das Kopplungselement (42, 60) in einer Röhrenform ausgebildet ist, die an beiden Enden davon die Passlöcher (50, 69) aufweist,
ein kreisförmiges Loch (50, 69) innerhalb des Kopplungselements (42, 60) ausgebildet ist, wobei das kreisförmige Loch (50, 69) einen Durchmesser aufweist, der ein Drehen eines vorderen Endes des Passvorsprungs (45, 64) erlaubt, und
das Passloch (50, 69) an einem Teil einer inneren Peripherie davon mit einem Verriegelungsabschnitt (51a-d, 70a-d) versehen ist, der einen Durchmesser kleiner als derjenige des kreisförmigen Lochs aufweist.

14. Kopplungsteil (27, 41), das in der Betätigungsschnur (9) nach einem der Ansprüche 1 bis 8 verwendbar ist, wobei das Kopplungsteil (27, 41) einen Teil des Kopplungsabschnitts (16) zum Koppeln beider Enden der Schnur (9) durch Passen eines Passvorsprungs (30, 45) und eines Passlochs (35, 50) bildet, **dadurch gekennzeichnet, dass** der Passvorsprung (30, 45) mit dem Passloch (35, 50) zusammenpassbar ist, indem er in das Passloch (35, 50) eingeführt und nachfolgend gedreht wird,
das Kopplungsteil (27, 41) mit einem Basisendabschnitt versehen ist, der die Form eines halben Sphäroids aufweist, und wobei der Passvorsprung (30, 45) eine Rundstabform aufweist und von dem Basisendabschnitt hin zu einem vorderen Ende des Kopplungsteils (27, 41) vorsteht, und
ein Teil einer Peripherie eines vorderen Endabschnitts des Passvorsprungs (30, 45) mit einem aufgeweiteten Abschnitt (31, 46) versehen ist, dessen äußere periphere Form, vom vorderen Ende her gesehen, ein Bogen ist.

15. Verbindungsstück (59a, 59b), das in der Betätigungsschnur (55) nach einem der Ansprüche 9 bis 11 verwendbar ist, wobei das Verbindungsstück (59a, 59b) einen Teil eines Kopplungsabschnitts (58) zum Koppeln beider Enden der Schnur (56) durch Passen eines Passvorsprungs (64) und eines Passlochs (69) bildet, **dadurch gekennzeichnet, dass** der Passvorsprung (64) mit dem Passloch (69) zusammenpassbar ist, indem er in das Passloch (69) eingeführt und nachfolgend gedreht wird,
das Verbindungsstück (59a, 59b) in der Lage ist, mit einer Kugel (57a), die an einem Ende der Schnur (56) angebracht ist, in Eingriff zu stehen, und einen Passvorsprung (64) mit einer axialen Form aufweist, und
ein Teil einer Peripherie eines vorderen Endabschnitts des Passvorsprungs (64) mit einem aufgeweiteten Abschnitt (65) versehen ist, dessen äußere periphere Form, vom vorderen Ende her gesehen, ein Bogen ist.

## Revendications

1. Cordon d'actionnement (9, 55), comprenant un cordon (14, 56) dont les deux extrémités sont reliées par un segment de connexion (16, 58), **caractérisé en ce que**
le segment de connexion (16, 58) présente une première partie de connexion (17, 27, 41, 59a, 59b) et une deuxième partie de connexion (18, 28) raccordées l'une à l'autre de manière directe ou par un élément de connexion (42, 60),
une des parties de connexion (17, 27, 41, 59a, 59b) adjacentes à l'autre ou l'élément de connexion (42, 60) adjacent à l'autre comporte une saillie d'ajustement (22, 30, 45, 64), et l'autre partie de connexion (18, 28) adjacente ou l'élément de connexion (42, 60) adjacent comporte un trou d'ajustement (26, 35, 50, 69) pouvant s'ajuster à la saillie d'ajustement (22, 30, 45, 64), et
la saillie d'ajustement (22, 30, 45, 64) peut s'ajuster avec le trou d'ajustement (26, 35, 50, 69) par insertion dans le trou d'ajustement (26, 35, 50, 69) et rotation consécutive.

2. Cordon d'actionnement (9, 55) selon la revendication 1, où des billes (15, 57) en résine synthétique sont moulées et fixées à intervalles réguliers sur le cordon (14, 56).

3. Cordon d'actionnement (9, 55) selon la revendication 1 ou la revendication 2, où la saillie d'ajustement (22, 30, 45, 64) est prévue avec une partie renflée (22a, 31, 46, 65), et le trou d'ajustement (26, 35, 50, 69) est prévu avec une partie de verrouillage (37, 51a-d, 70a-d) destinée à venir en prise avec la partie renflée (22a, 31, 46, 65).

4. Cordon d'actionnement (9, 55) selon l'une des revendications 1 à 3, où une surface périphérique intérieure du trou d'ajustement (26, 35, 50, 69) est prévue avec un moyen de positionnement (36, 52, 71) destiné à positionner la saillie d'ajustement (22, 30, 45, 64) en rotation.

5. Cordon d'actionnement (9) selon l'une des revendications 1 à 4, où
la première partie de connexion (17, 27, 41, 59a, 59b) présente une première section d'ajustement (21, 29, 43) pourvue de la saillie d'ajustement (22, 30, 45) à une extrémité d'un premier cordon de liaison (19) ; et
la deuxième partie de connexion (18, 28) présente une deuxième section d'ajustement (25, 34, 43) pourvue de la saillie d'ajustement (22, 30, 45) ou du trou d'ajustement (26, 35, 50) à une extrémité d'un deuxième cordon de liaison (23),
où un hémisphéroïde (20, 24) prévu à l'autre extrémité de chaque cordon de liaison (19, 23) et un hémisphéroïde (15a) prévu à chaque extrémité du cordon (14) sont fusionnés de manière à former la bille.

6. Cordon d'actionnement (9) selon la revendication 5, où la saillie d'ajustement (22, 30, 45) est formée par moulage extérieur à l'extrémité du premier cordon de liaison (19).

7. Cordon d'actionnement (9) selon la revendication 5 ou la revendication 6, où la deuxième section d'ajustement (25, 34) est formée par moulage extérieur à l'extrémité du deuxième cordon de liaison (23), une extrémité avant de la deuxième section d'ajustement (25, 34) étant pourvue du trou d'ajustement (26, 35), et la profondeur du trou d'ajustement (26, 35) étant égale ou inférieure à la moitié de la longueur de la deuxième section d'ajustement (25, 34).

8. Cordon d'actionnement (9, 55) selon l'une des revendications 1 à 6, où
la première et la deuxième parties de connexion (41, 59a, 59b) sont raccordées par l'élément de connexion (42, 60) ;
la première et la deuxième parties de connexion (41, 59a, 59b) sont pourvues chacune d'une saillie d'ajustement axiale (45, 64) ; et
l'élément de connexion (42, 60) est tubulaire et présente des trous d'ajustement (50, 69) à ses deux extrémités de manière à être ajustable avec les saillies d'ajustement (45, 64) pour que les saillies d'ajustement (45, 64) soient en vis-à-vis.

9. Cordon d'actionnement (55) selon l'une des revendications 1 à 4, où
la première et la deuxième parties de connexion (41, 59a, 59b) sont raccordées par l'élément de connexion (42, 60) ;
la première et la deuxième parties de connexion (41, 59a, 59b) sont une paire de connecteurs (59a, 59b) pouvant s'enclencher avec des billes (57a) fixées aux extrémités du cordon (56) et pourvus de saillies d'ajustement axiales (64) ; et
l'élément de connexion (60) présente des trous d'ajustement (69) à ses deux extrémités permettant le raccordement des connecteurs (59a, 59b).

10. Cordon d'actionnement (55) selon la revendication 9, où les connecteurs (59a, 59b) de la paire sont de forme identique.

11. Cordon d'actionnement (55) selon l'une des revendications 8 à 10, où les angles d'ajustement auxquels une paire de saillies d'ajustement (64) s'ajuste avec l'élément de connexion (60) sont relativement décalés l'un par rapport à l'autre.

12. Procédé de fabrication d'un cordon d'actionnement (9) selon l'une des revendications 1 à 11, comprenant les étapes suivantes :
moulage et fixation à intervalles réguliers de billes (15) en résine synthétique sur un cordon (14) ;
formation d'une première section d'ajustement (21, 29, 43) pourvue d'une saillie d'ajustement (22, 30, 45) à une extrémité d'un premier cordon de liaison (19) ;
formation d'un hémisphéroïde (20) correspondant à une moitié de la bille (15) sur l'autre extrémité du premier cordon de liaison (19) ;
formation d'une deuxième section d'ajustement (25, 34) pourvue d'un trou d'ajustement (26, 35), à une extrémité d'un deuxième cordon de liaison (23), la saillie d'ajustement (22, 30) et le trou d'ajustement (26, 35) pouvant s'auster l'une avec l'autre et étant amovibles l'une de l'autre ;
formation d'un hémisphéroïde (24) correspondant à une moitié de la bille (15) sur l'autre extrémité du deuxième cordon de liaison (23), la forme de la première et (21, 29) et de la deuxième sections d'ajustement (25, 34) étant identique à celle de la bille (15) quand la saillie d'ajustement (22, 30) est ajustée au trou d'ajustement (26, 35) ; et
fusion des hémisphéroïdes (20, 24) du premier et du deuxième cordons de liaison (19, 23) en hémisphéroïdes (15a) présentés aux deux extrémités du cordon (14), de manière à former les billes (15).

13. Elément de connexion (42, 60) pouvant être utilisé dans le cordon d'actionnement (9, 55) selon l'une des revendications 1 à 11, ledit élément de connexion (42, 60) faisant partie du segment de connexion (16, 58) pour relier les deux extrémités du cordon (14, 56) par ajustement de la saillie d'ajustement (45, 64) et du trou d'ajustement (50, 69), **caractérisé en ce que** la saillie d'ajustement (45, 64) peut s'ajuster avec le trou d'ajustement (50, 69) en étant insérée dans le trou d'ajustement (50, 69) et consécutivement tournée,
l'élément de connexion (42, 60) est de forme tubulaire avec des trous d'ajustement (50, 69) à ses deux extrémités,
un trou circulaire (50, 69) est formé à l'intérieur de l'élément de connexion (42, 60), ledit trou circulaire (50, 69) présentant un diamètre permettant la rotation d'une extrémité avant de la saillie d'ajustement (45, 64), et
le trou d'ajustement (50, 69) est pourvu sur une partie de sa périphérie intérieure d'une partie de verrouillage (51a-d, 70a-d) dont le diamètre est inférieur à celui du trou circulaire.

14. Partie de connexion (27, 41) pouvant être utilisée dans le cordon d'actionnement (9) selon l'une des revendications 1 à 8, ladite partie de connexion (27, 41) faisant partie du segment de connexion (16) pour relier les deux extrémités du cordon (9) par ajustement d'une saillie d'ajustement (30, 45) et d'un trou d'ajustement (35, 50), **caractérisé en ce que** la saillie d'ajustement (30, 45) peut s'ajuster avec le trou d'ajustement (35, 50) en étant insérée dans le trou d'ajustement (35, 50) et consécutivement tournée,
la partie de connexion (27, 41) est prévue avec une partie d'extrémité de base de forme hémisphéroïdale, la saillie d'ajustement (30, 45) ayant une forme de tige cylindrique et faisant saillie depuis la partie d'extrémité de base vers une extrémité avant de la partie de connexion (27, 41), et
une partie de la périphérie d'une partie d'extrémité avant de la saillie d'ajustement (30, 45) est prévue avec une partie renflée (31, 46) dont la forme périphérique extérieure est en arc, vue depuis l'extrémité avant.

15. Connecteur (59a, 59b) pouvant être utilisée dans le cordon d'actionnement (55) selon l'une des revendications 9 à 11, ledit connecteur (59a, 59b) faisant partie d'un segment de connexion (58) reliant les deux extrémités du cordon (56) par ajustement d'une saillie d'ajustement (64) et d'un trou d'ajustement (69), **caractérisé en ce que** la saillie d'ajustement (64) peut s'ajuster avec le trou d'ajustement (69) en étant insérée dans le trou d'ajustement (69) et consécutivement tournée,
le connecteur (59a, 59b) peut s'enclencher avec une bille (57a) fixée à une extrémité du cordon (56) et a une saillie d'ajustement (64) de forme axiale, et
une partie de la périphérie d'une partie d'extrémité avant de la saillie d'ajustement (64) est prévue avec une partie renflée (65) dont la forme périphérique extérieure est en arc, vue depuis l'extrémité avant.
